# EUROPEAN PATENT SPECIFICATION

(11) **EP 4 250 048 B1**
(45) Date of publication and mention of the grant of the patent: **23.09.2026**
(21) Application number: 21896249.6
(22) Date of filing: 31.05.2021
(51) Int. Cl.: B60W 60/00

(54) **METHOD AND APPARATUS FOR DETERMINING TRANSVERSE PLANNING CONSTRAINT**
VERFAHREN UND VORRICHTUNG ZUR BESTIMMUNG EINER QUERPLANUNGSEINSCHRÄNKUNG
PROCÉDÉ ET APPAREIL PERMETTANT DE DÉTERMINER UNE CONTRAINTE DE PLANIFICATION TRANSVERSALE

(30) Priority: 24.11.2020 CN 202011331404
(43) Date of publication of application: 27.09.2023
(73) Proprietor: Yinwang Intelligent Technologies Co., Ltd., Shenzhen, Guangdong 518110 (CN)
(72) Inventor: YANG, Shaoyu, Shenzhen, Guangdong 518129 (CN); WANG, Xinyu, Shenzhen, Guangdong 518129 (CN)
(74) Representative: Körber, Martin Hans
(86) International application number: PCT/CN2021/097295
(87) International publication number: WO 2022/110740

(56) References cited:
- EP-A1- 3 738 849
- CN-A- 106 314 419
- CN-A- 111 123 952
- CN-A- 111 383 474
- CN-A- 111 443 709
- DE-A1- 102010 002 105
- JP-A- 2014 210 456
- US-A1- 2014 121 880

## Description

### TECHNICAL FIELD

This invention relates to the field of autonomous driving, and specifically, to a method and an apparatus for determining a lateral planning constraint.

### BACKGROUND

Development of artificial intelligence makes autonomous driving possible. Key technologies for implementing the autonomous driving include map and positioning, environment perception, fusion prediction, decision-making, planning, and bottom-layer control. The planning mainly refers to longitudinal speed planning and lateral path planning in a driving process of an autonomous vehicle. In the lateral path planning, when the autonomous vehicle travels on a real road, a lateral path planner may plan, based on a traffic environment around the autonomous vehicle and a state of the autonomous vehicle, an avoidance trajectory that enables the autonomous vehicle to perform small-scale in-lane avoidance or large-scale cross-lane avoidance. Planning of the avoidance trajectory needs to be carried out in a specific lateral avoidance range, so that an avoidance process of the autonomous vehicle is reasonable and controllable. Therefore, in the driving process of the autonomous vehicle, a reasonable lateral avoidance range is needed, to perform the lateral path planning.

EP3738849A1 discloses a vehicle control device for controlling vehicle traveling. The control device comprises a surrounding vehicle detection part configured to detect a surrounding vehicle traveling around an own vehicle; a course information acquisition part configured to acquire traveling course information regarding a subsequent traveling course of the surrounding vehicle detected by the surrounding vehicle detection part; a speed distribution setting part configured to set a speed limit distribution defining a permissible upper limit relative speed, around the surrounding vehicle detected by the surrounding vehicle detection part; and a control part configured to control a speed and/or steering of the own vehicle to satisfy the speed limit distribution set by the speed distribution setting part. The speed distribution setting part is configured to set the speed limit distribution, according to the traveling course information acquired by the course information acquisition part. For instance, D1 discloses increasing lateral safety distance with respect to obstacles with increased driving speed. That is, D1 dhows determination of a dynamic and speed-dependent driving constraint.

DE102010002105 A1 discloses a method for assisting a driver of a vehicle. In particular, an autonomous collision avoidance solution is shown, which considers a lateral distance to an object monitored by sensors of a vehicle.

### SUMMARY

Embodiments of this invention provide a method and an apparatus for determining a lateral planning constraint, to dynamically determine the lateral planning constraint based on a state of an autonomous vehicle and a road condition in a driving process.

According to a first aspect, an embodiment of this invention provides a method for determining a lateral planning constraint, applied to an autonomous vehicle. The method includes: obtaining a driving reference trajectory of the autonomous vehicle on a first road, where the driving reference trajectory includes a plurality of waypoints; determining a static lateral planning constraint on a first side of the first waypoint based on a lane line on the first side of the first waypoint in the plurality of waypoints, where the first side is a left side or a right side; when an actual driving trajectory of the autonomous vehicle does not deviate from the driving reference trajectory, determining an initial lateral planning constraint on the first side for the autonomous vehicle at the first waypoint based on a driving speed of the autonomous vehicle at the first waypoint, the static lateral planning constraint, and a body width of the autonomous vehicle; and determining, based on at least a first distance between a first object and the first waypoint and the initial lateral planning constraint, an actual lateral planning constraint on the first side for the autonomous vehicle at the first waypoint, where the first object is on the first road, and is an object of concern to the autonomous vehicle.

In other words, in the method for determining the lateral planning constraint provided in this embodiment of this invention, the lateral planning constraint of the waypoint may be preliminarily determined based on the waypoint of driving reference. Then, the lateral planning constraint of the waypoint is shrunk or released based on the driving speed of the vehicle at the waypoint, the body width of the vehicle, and an obstacle.

In a possible implementation, the lane line on the first side is a changeable lane line; the static lateral planning constraint includes a first soft static lateral planning constraint and a first hard static lateral planning constraint, where the first soft static lateral planning constraint is less than a half width of a lane in which the first waypoint is located, and the first hard static lateral planning constraint is greater than the half width of the lane in which the first waypoint is located; and the initial lateral planning constraint includes a first soft initial lateral planning constraint and a first hard initial lateral planning constraint, where the first soft initial lateral planning constraint is determined based on the driving speed of the autonomous vehicle at the first waypoint, the first soft static lateral planning constraint, and the body width of the autonomous vehicle, and the first hard initial lateral planning constraint is determined based on the driving speed of the autonomous vehicle at the first waypoint, the first hard static lateral planning constraint, and the body width of the autonomous vehicle.

That is, in this implementation, two types of lateral planning constraint may be determined, and a cost of a lateral offset of an ego vehicle within a soft lateral planning constraint range is less than a cost of the lateral offset within a hard lateral planning constraint range. Thus, the ego vehicle can flexibly perform the lateral offset based on a soft lateral planning constraint and/or a hard lateral planning constraint. For example, the ego vehicle may preferentially perform the lateral offset within the soft lateral planning constraint range. If performing the lateral offset within the soft lateral planning constraint range does not meet an actual driving requirement, (for example, an obstacle cannot be avoided, or an unexpected road condition cannot be handled), the lateral offset may be performed within the hard lateral planning constraint range.

In a possible implementation, the first soft static lateral planning constraint is obtained by subtracting a first preset value from the half width of the lane in which the first waypoint is located, and the first hard static lateral planning constraint is obtained by adding a second preset value to the first soft static lateral planning constraint.

That is, in this implementation, the soft static lateral planning constraint may be set to be less than a half of the lane, so that the ego vehicle can perform the lateral offset at a low cost. Then, the soft static lateral planning constraint is broadened, to obtain the hard static lateral planning constraint, so that the ego vehicle can have large avoidance space during avoidance.

In a possible implementation, the first waypoint is located in a first lane on the first road, the first object is located in a second lane adjacent to the first lane, and the second lane is located on the first side of the first lane. The actual lateral planning constraint includes a hard actual lateral planning constraint. The determining, based on at least a first distance between a first object and the autonomous vehicle and the initial lateral planning constraint, an actual lateral planning constraint on the first side for the autonomous vehicle at the first waypoint includes: determining a risk degree of collision between the first object and the autonomous vehicle based on the first distance, a moving speed of the first object, a moving direction of the first object, a moving speed of the autonomous vehicle, and a moving direction of the autonomous vehicle; when the collision risk degree is less than a preset safety threshold, reducing the first hard initial lateral planning constraint, so that the first hard initial lateral planning constraint is less than or equal to the half width of the lane in which the first waypoint is located; and determining that a reduced first hard initial lateral planning constraint is the hard actual lateral planning constraint.

In other words, in this implementation, a width of the lateral planning constraint may be determined based on a risk degree of collision between the ego vehicle and a vehicle on an adjacent lane, to ensure driving safety of the ego vehicle.

In a possible implementation, the collision risk degree includes time to collision TTC and/or head way time HWT.

In a possible implementation, the first object and the first waypoint are in a same lane, and the autonomous vehicle gradually approaches the first object during driving of the autonomous vehicle; the lane line on the first side is the changeable lane line; the first distance includes a first lateral offset between the first object and the first waypoint, and the first lateral offset is a distance between the first object and the first waypoint in a first direction; the actual lateral planning constraint includes a hard actual lateral planning constraint; and the first direction is perpendicular to a driving direction of the autonomous vehicle at the first waypoint. The determining, based on at least a first distance between a first object and the first waypoint and the initial lateral planning constraint, an actual lateral planning constraint on the first side for the autonomous vehicle at the first waypoint includes: adding a first difference and the width of the autonomous vehicle to obtain a first sum, where the first difference is obtained by subtracting the first soft initial lateral planning constraint from the first lateral offset; when the first sum is less than or equal to a lateral expansion width of the first side, or a sum of the first sum and a preset first safety distance is less than or equal to the lateral expansion width, adding the first soft initial lateral planning constraint and the lateral expansion width to obtain a second sum; and determining that the second sum is the hard actual lateral planning constraint.

That is, in this implementation, it may be first determined whether the ego vehicle can bypass a front obstacle. If the ego vehicle can bypass the front obstacle, the hard lateral planning constraint is expanded, so that the ego vehicle can bypass the front obstacle through the lateral offset.

In a possible implementation, the first object and the first waypoint are in a same lane, and the autonomous vehicle gradually approaches the first object during driving of the autonomous vehicle; the lane line on the first side is the changeable lane line, and a lane line on an opposite side of the first side is an unchangeable lane line; the first distance includes a first lateral offset between the first object and the first waypoint, and the first lateral offset is a distance between the first object and the first waypoint in a first direction; the actual lateral planning constraint includes a hard actual lateral planning constraint; and the first direction is perpendicular to a driving direction of the autonomous vehicle at the first waypoint. The determining, based on at least a first distance between a first object and the first waypoint and the initial lateral planning constraint, an actual lateral planning constraint on the first side of the autonomous vehicle at the first waypoint includes: adding a first difference and the width of the autonomous vehicle to obtain a first sum, where the first difference is obtained by subtracting the first soft initial lateral planning constraint from the first lateral offset; and when the first sum is greater than a lateral expansion width of the first side, or a sum of the first sum and a preset first safety distance is greater than the lateral expansion width, determining that the first hard initial lateral planning constraint is the hard actual lateral planning constraint.

That is, in this implementation, it may be first determined whether the ego vehicle can bypass a front obstacle. If the ego vehicle cannot bypass the front obstacle, the hard lateral planning constraint is not expanded, so that the ego vehicle no longer attempts to bypass the front obstacle.

In a possible implementation, the method further includes: determining a second distance between the first waypoint and the first object in the driving direction of the autonomous vehicle at the first waypoint, and determining a first length of driving of the autonomous vehicle within first duration; when a third distance is less than the first length, determining that the third distance is a longitudinal planning constraint of the autonomous vehicle at the first waypoint, or when a third distance is greater than the first length, determining that the first length is a longitudinal planning constraint of the autonomous vehicle at the first waypoint, where the third distance is equal to the second distance, or the third distance is obtained by subtracting a preset second safety distance from the second distance; and when the autonomous vehicle is located at the first waypoint, determining a driving policy of the autonomous vehicle based on road condition information within a longitudinal planning constraint range.

That is, in this implementation, when the ego vehicle cannot bypass the front obstacle, the longitudinal planning constraint range may be determined. When the actual driving trajectory of the ego vehicle is planned, only an object within the longitudinal planning constraint range may be considered, to avoid error avoidance or a phenomenon that the ego vehicle still cannot pass the front obstacle after avoidance.

In a possible implementation, the determining an initial lateral planning constraint on the first side for the autonomous vehicle at the first waypoint based on a driving speed of the autonomous vehicle at the first waypoint, the static lateral planning constraint, and a body width of the autonomous vehicle includes: when the driving speed is less than or equal to a preset first speed threshold, determining that the initial lateral planning constraint is equal to the static lateral planning constraint; when the driving speed is greater than or equal to a preset second speed threshold, determining that the initial lateral planning constraint is equal to a half of the body width; and when the first speed threshold is less than the driving speed, and the driving speed is less than the second speed threshold, determining the initial lateral planning constraint based on the driving speed and a speed-lateral planning constraint curve, where a magnitude of a speed is negatively correlated with a magnitude of a lateral planning constraint in the lateral planning constraint-speed curve.

That is, in this implementation, a width of the lateral planning constraint may be reduced when a speed of the vehicle is high, thereby improving driving safety of the vehicle. In addition, the width of the lateral planning constraint may be expanded when the speed of the vehicle is low, thereby increasing a lateral movement range of the ego vehicle.

In a possible implementation, the method further includes: when the autonomous vehicle performs an avoidance action, determining, based on an initial lateral planning constraint on the first side of a second waypoint in the plurality of waypoints, an actual lateral planning constraint on the first side for the autonomous vehicle at a current position, where the autonomous vehicle starts to perform the avoidance action at the second waypoint.

In a possible implementation, the determining, based on an initial lateral planning constraint on the first side of a second waypoint in the plurality of waypoints, an actual lateral planning constraint on the first side for the autonomous vehicle at a current position includes: when a current speed of the autonomous vehicle is greater than or equal to a speed of the autonomous vehicle at the second waypoint, determining that an actual lateral planning constraint on the first side of the second waypoint is the actual lateral planning constraint on the first side of the current position; or when a current speed of the autonomous vehicle is less than a speed of the autonomous vehicle at the second waypoint, determining, based on the current speed, a static lateral planning constraint on the first side of the second waypoint, and the body width of the autonomous vehicle, the actual lateral planning constraint on the first side of the current position.

That is, in this implementation, if the ego vehicle accelerates during avoidance, a width of the lateral planning constraint of the ego vehicle is locked, so that the width does not increase with an increase in a speed of the vehicle, thereby improving driving safety of the ego vehicle. If the ego vehicle decelerates during avoidance, the width of the lateral planning constraint of the ego vehicle may be increased, thereby increasing lateral movement space of the ego vehicle.

In a possible implementation, the method further includes: when the autonomous vehicle performs a lane change action from a third lane to a fourth lane, gradually changing the static lateral planning constraint on the first side for the autonomous vehicle from a first static lateral planning constraint to a second static lateral planning constraint, where the first static lateral planning constraint is determined based on a lane line on the first side of the third lane, and the second static lateral planning constraint is determined based on a lane line on the first side of the fourth lane.

That is, in this implementation, during a lane change of the ego vehicle, the lateral planning constraint of the ego vehicle may be gradually transitioned from a lateral planning constraint determined based on an original lane to a lateral planning constraint determined based on a target lane.

In a possible implementation, the method further includes: controlling a lateral movement on the first side for the autonomous vehicle at the first waypoint within a range of the actual lateral planning constraint, where the lateral movement is a movement in a first direction, and the first direction is perpendicular to a driving direction of the autonomous vehicle at the first waypoint.

That is, in this implementation, the ego vehicle may perform the lateral movement within the determined lateral planning constraint range, so that driving safety of the ego vehicle can be ensured, and passability of the ego vehicle can be improved.

According to a second aspect, an apparatus for determining a lateral planning constraint is provided, and is configured in an autonomous vehicle. The apparatus includes: an obtaining unit, configured to obtain a driving reference trajectory of the autonomous vehicle on a first road, where the driving reference trajectory includes a plurality of waypoints; a first determining unit, configured to determine a static lateral planning constraint on a first side of the first waypoint based on a lane line on the first side of the first waypoint in the plurality of waypoints, where the first side is a left side or a right side; a second determining unit, configured to: when an actual driving trajectory of the autonomous vehicle does not deviate from the driving reference trajectory, determine an initial lateral planning constraint on the first side for the autonomous vehicle at the first waypoint based on a driving speed of the autonomous vehicle at the first waypoint, the static lateral planning constraint, and a body width of the autonomous vehicle; and a third determining unit, configured to: determine, based on at least a first distance between a first object and the first waypoint and the initial lateral planning constraint, an actual lateral planning constraint on the first side for the autonomous vehicle at the first waypoint, where the first object is on the first road, and is an object of concern to the autonomous vehicle.

According to a third aspect, an embodiment of this invention provides a computer-readable storage medium, where the computer-readable medium stores instructions executed by a computing device. When executing the instructions, the computing device implements the method according to any one of the first aspect or possible implementations of the first aspect.

According to a fourth aspect, an embodiment of this invention provides a computer program product including instructions. When the computer program product runs on a computing device, the computing device is enabled to perform the method according to any one of the first aspect or possible implementations of the first aspect. For instance, this disclosure provides a chip, where the chip includes a processor and a data interface. The processor reads, through the data interface, instructions stored in a memory, to perform the method in any one of the first aspect or possible implementations of the first aspect.

According to the method and apparatus for determining the lateral planning constraint provided in embodiments of this invention , the lateral planning constraint may be dynamically released or reduced based on a traffic environment, so that driving safety of the ego vehicle can be ensured and passability of the ego vehicle can be enhanced.

### BRIEF DESCRIPTION OF DRAWINGS

FIG. 1 is a functional block diagram of an autonomous vehicle according to an embodiment of this invention;
FIG. 2 is an architectural diagram of an autonomous driving system according to an embodiment of this invention;
FIG. 3A and FIG. 3B are a flowchart of a method for determining a lateral planning constraint according to an embodiment of this invention;
FIG. 4 is a diagram of a lateral planning constraint-speed curve according to an embodiment of this invention;
FIG. 5 is a schematic diagram of a scenario to which a method for determining a lateral planning constraint may be applied according to an embodiment of this invention;
FIG. 6 is a schematic diagram of a scenario to which a method for determining a lateral planning constraint may be applied according to an embodiment of this invention;
FIG. 7 is a schematic diagram of a scenario to which a method for determining a lateral planning constraint may be applied according to an embodiment of this invention;
FIG. 8 is a schematic diagram of a scenario to which a method for determining a lateral planning constraint may be applied according to an embodiment of this invention;
FIG. 9 is a schematic diagram of a scenario to which a method for determining a lateral planning constraint may be applied according to an embodiment of this invention;
FIG. 10 is a schematic diagram of a scenario to which a method for determining a lateral planning constraint may be applied according to an embodiment of this invention;
FIG. 11 is a schematic diagram of a scenario to which a method for determining a lateral planning constraint may be applied according to an embodiment of this invention;
FIG. 12 is a flowchart of a method for determining a lateral planning constraint according to an embodiment of this invention;
FIG. 13 is a flowchart of a method for determining a lateral planning constraint according to an embodiment of this invention;
FIG. 14 is a schematic diagram of a structure of a lateral planning constraint apparatus according to an embodiment of this invention; and
FIG. 15 is a schematic diagram of a structure of a lateral planning constraint apparatus according to an embodiment of this invention.

### DESCRIPTION OF EMBODIMENTS

The following describes technical solutions in embodiments of the present invention with reference to accompanying drawings. It is clear that the described embodiments are merely some rather than all of embodiments of this specification.

In the descriptions of this specification, "an embodiment", "some embodiments", or the like indicates that one or more embodiments of this specification include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In the descriptions of this specification, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the descriptions in embodiments of this specification, "a plurality of" means two or more than two.

In the descriptions of this specification, terms "first" and "second" are merely intended for description, and shall not be understood as an indication or implication of relative importance or implicit indication of a quantity of indicated technical features. Therefore, a feature limited by "first" or "second" may explicitly or implicitly include one or more features. Terms "include", "contain", "have", and their variants all mean "include but are not limited to", unless otherwise specifically emphasized in another manner.

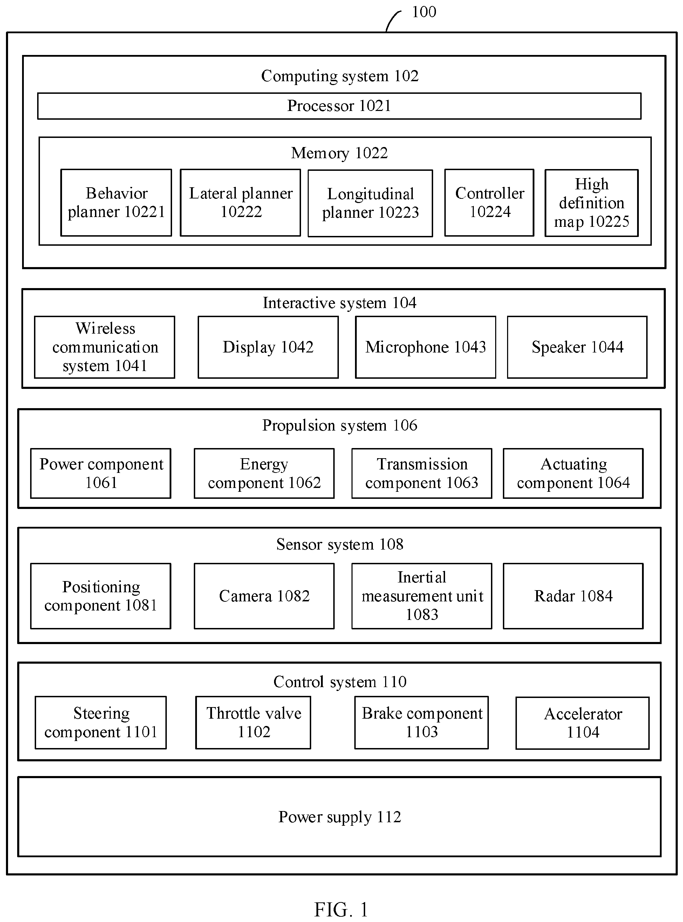

FIG. 1 is a functional block diagram of a vehicle 100 according to an embodiment of this invention.

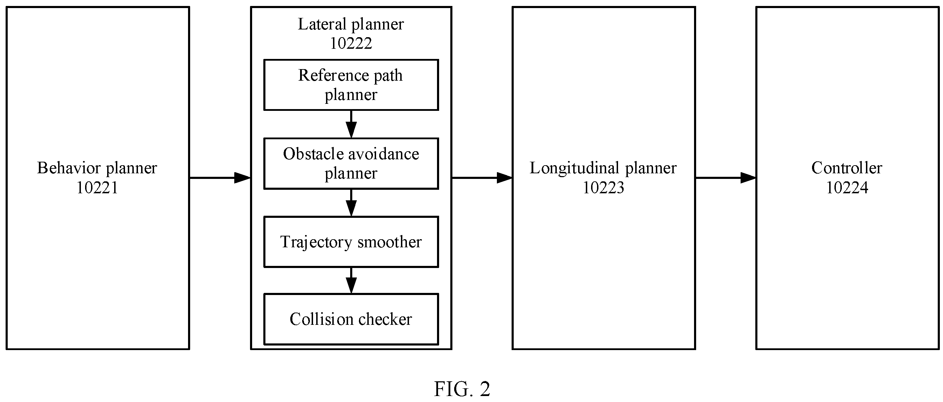

Refer to FIG. 2. The vehicle 100 may include a computing system 102, an interactive system 104, a propulsion system 106, a sensor system 108, a control system 110, a power supply 112, and the like.

It can be understood that the structure shown in this embodiment of this invention does not constitute a specific limitation on the vehicle 100. In some other embodiments of this invention, the vehicle 100 may include more or fewer components than those shown in the figure, or combine some components, or split some components, or have different component arrangements. The components shown in the figure may be implemented by hardware, software, or a combination of software and hardware.

Components of the vehicle 100 may be connected through a system bus (for example, a controller area network bus (controller area network bus), CAN bus), a network, and/or another connecting mechanism, so that the components can operate in an interconnected manner.

The computing system 102 may include a processor 1021, a memory 1022, and the like.

The processor 1021 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The memory 1022 may include a high-speed random access memory, and may further include a nonvolatile memory, for example, at least one magnetic disk storage device, a flash memory device, or a universal flash memory (universal flash storage, UFS). The memory 1022 is generally configured to store instructions that can be run on the processor 1021 to implement various operations. The instructions are instructions including one or more software applications (such as a behavior planner (behavior planner) 10221, a lateral planner (lateral planner) 10222, a longitudinal planner (speed planner) 10223, a controller (controller) 10224, and a high definition map 10225 that are shown in FIG. 1 and are specifically described below). The memory 1022 may be further configured to store data used and/or generated by the one or more software applications.

The processor 1021 may execute various functions and data processing described below by running the instructions stored in the memory 1022.

For example, the computing system 102 may be implemented as an in-vehicle intelligent system or an autonomous driving system, and may implement autonomous driving of the vehicle 100 (during driving, the vehicle 100 is fully autonomous, and requires no or minimal control by a driver). Semi-autonomous driving of the vehicle 100 can also be realized (during driving, the vehicle is not fully autonomous, and requires moderate control by the driver). The driver may also drive the vehicle 100 manually (high-degree control by the driver of the vehicle 100). The autonomous driving, the semi-autonomous driving, and the manual control of the vehicle can be set to respectively correspond to different automation levels.

The interactive system 104 may include a wireless communication system 1041, a display 1042, a microphone 1043, a speaker 1044, and the like.

The wireless communication system 1041 may include one or more antennas, a modem, a baseband processor, and the like, and may communicate with another vehicle and another communication entity. Generally, the wireless communication system may be configured to perform communication through one or more communication technologies, for example, mobile communication technologies such as 2G/3G/4G/5G, and wireless communication technologies such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and another communication technology. These are not listed herein one by one.

The display 1042 is configured to display an image, a video, and the like. The display 1042 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like.

In some embodiments, the display panel may be covered with a touch panel. After detecting a touch operation on or near the touch panel, the touch panel may transfer the touch operation to the processor 1021 to determine a touch event type. A visual output related to the touch operation may be provided on the display 1042. In some other embodiments, the touch panel and the display 1042 may be at different positions.

The microphone 1043, also referred to as a "mike" or a "mic", is configured to convert a sound signal into an electrical signal. When a user wants to control the vehicle 100 by using a voice, the user may make a voice by a mouth close to the microphone 1043, to input a voice command to the microphone 1043. The vehicle 100 may be provided with at least one microphone 1043. In some embodiments, two microphones 1043 may be disposed in the vehicle 100, to collect the sound signal and further implement a noise reduction function. In some other embodiments, three, four, or more microphones 1043 may alternatively be disposed in the electronic device 100, to collect the sound signal, implement noise reduction, and identify a sound source, so as to implement a directional recording function and the like.

The speaker 1044, also referred to as a "loudspeaker", is configured to convert an audio electrical signal into the sound signal. In the vehicle 100, music is played or prompt information is broadcast through the speaker 1044.

The propulsion system 106 may include a power component 1061, an energy component 1062, a transmission component 1063, an actuating component 1064, and the like.

The power component 1061 may be an engine, may be any one or a combination of engines such as a gasoline engine, an electric motor of an electric vehicle, a diesel engine, and a hybrid engine, or may be an engine in another form.

The energy component 1062 may be a source of energy, totally or partially powering the power component 1061. That is, the power component 1061 may be configured to convert, into mechanical energy, energy provided by the energy component 1062. The energy that may be provided by the energy component 1062 includes gasoline, diesel, another petroleum-based fuel, propane, another compressed gas-based fuel, ethanol, a solar panel, a battery, and another source of electrical power. The energy component 1062 may also include any combination of a fuel tank, a battery, a capacitor, and/or a flywheel. In some embodiments, the energy component 1062 may also power another system of the vehicle 100.

The transmission component 1063 may include a transmission, a clutch, a differential, a drive shaft, and another component. The transmission component 1063 may transmit mechanical energy from the power component 1061 to the actuating component 1064.

The actuating component 1064 may include a wheel, a tire, and the like. The wheel may be configured in a variety of styles including a single-wheeled style, a two-wheeled/motorcycle style, a tricycle style, a sedan/truck four-wheeled style, or the like. The tire may be attached to the wheel, and the wheel may be attached to the transmission component 1063 and may rotate in response to mechanical power transmitted by the transmission component 1063 to drive the vehicle 100.

The sensor system 108 may include a positioning component 1081, a camera 1082, an inertial measurement unit 1083, a radar 1084, and the like.

The positioning component 1081 may be configured to estimate a position of the vehicle 100. The positioning component 1081 may include a transceiver configured to estimate, based on satellite positioning data, the position of the vehicle 100 relative to the Earth. In some embodiments, the computing system 102 may be configured to use the positioning component 1081 based on map data to estimate a road on which the vehicle 100 may travel and a position of the vehicle 100 on the road. Specifically, the positioning component 1081 may include a global positioning system (global positioning system, GPS) module, a BeiDou navigation satellite system (BeiDou navigation satellite system, BDS), a Galileo satellite navigation system (Galileo satellite navigation system), or the like.

The camera 1082 may include an out-of-vehicle camera configured to capture an environment outside the vehicle 100, or may include an in-vehicle camera configured to capture an environment inside the vehicle 100. The camera 1082 may be a camera that detects visible light, or detects light from another part of a spectrum (infrared light, ultraviolet light, or the like). The camera 1082 is configured to capture a two-dimensional image, and may also be configured to capture a depth image.

The inertial measurement unit (inertial measurement unit, IMU) 1083 is configured as any combination of sensors that sense a change in position and orientation of the vehicle 100 based on inertial acceleration. In some embodiments, the inertial measurement unit 1083 may include one or more accelerometers and gyroscopes.

The radar 1084 may include a sensor configured to use light waves or sound waves to sense or detect an object in an environment of the vehicle 100. Specifically, the radar 1084 may be a laser radar, a millimeter wave radar, an ultrasonic radar, or the like.

The computing system 102 may determine perception information of the vehicle 100 based on data collected by the components in the sensor system 108. For example, the computing system 102 may use computer vision computing and a sensor fusion technology to determine the perception information of the vehicle 100 based on data collected by one or more components of the sensor system 108.

The control system 110 may include a steering component 1101, a brake component 1102, an accelerator 1103, and the like.

The steering component 1101 may be a component configured to adjust a driving direction of the vehicle 100 in response to a driver operation or a computer instruction. For example, the steering component 1101 may include a steering wheel.

The throttle valve 1102 may be a component configured to control an operating speed and acceleration of the power component 1061 and further control a speed and acceleration of the vehicle 100.

The brake component 1103 may be a component configured to reduce a driving speed of the vehicle 100. For example, the brake component 1103 may use friction to slow down a rotational speed of the wheel in the actuating component 1064.

The accelerator 1104 may be a component configured to increase the driving speed of the vehicle 100.

Each component in the control system 110 can respond to a control instruction delivered by the controller 1024, and perform a corresponding operation. For example, the steering wheel in the steering component 1101 may rotate by a specific angle in response to the control instruction delivered by the controller 1024. For another example, the brake component 1103 may perform braking in response to the control instruction delivered by the controller 1024. Other examples are not listed one by one herein.

The power supply 112 may be configured to provide power to a portion or all of the components of the vehicle 100. In some embodiments, the power supply 112 may include a lithium ion battery or a lead battery that can charge and discharge repeatedly. In some embodiments, the power supply 112 may include one or more battery groups. In some embodiments, the power supply 112 and the energy component 1062 may be implemented together. The power component 1061 may convert chemical energy provided by the power supply 112 into mechanical energy of a motor, and the mechanical energy of a motor is transmitted to the actuating component 1064 via the transmission component 1063, to implement driving of the vehicle 100.

Based on the foregoing functions of the vehicle 100, an embodiment of this invention provides a method for determining a lateral planning constraint. The vehicle 100 may dynamically release or reduce the lateral planning constraint based on information about the vehicle and road condition information of a road during driving of the vehicle 100. In this embodiment of this invention, the vehicle 100 may also be referred to as an ego vehicle. The lateral planning constraint may also be referred to as a lateral constraint, and refers to a lateral avoidance range of the ego vehicle. That is, the ego vehicle needs to perform a lateral movement within the range or constraint of the lateral planning constraint. The lateral refers to a direction perpendicular to or approximately perpendicular to a driving direction of the vehicle.

The processor 1021 of the vehicle 100 may run an instruction of one or more applications stored in the memory 1022, to implement the method for determining the lateral planning constraint provided in this embodiment of this invention. For ease of description, the following uses an application in the one or more applications as a subject for description. It may be understood that, when it is mentioned that an application performs a step or has a function, it means that the processor 1021 performs the step or implements the function by running the instruction of the application.

During driving of the vehicle, high-level decision-making, path planning (also known as trajectory planning) and bottom-level control are often needed. A lane change is taken as an example. A human driver first needs to consider a safety factor, a traffic regulation factor, and the like, to decide a lane change occasion. Second, a driving trajectory is planned for the vehicle. Then, the steering wheel, the accelerator, a brake, or the like is controlled, so that the vehicle can follow the planned driving trajectory. A decision-making process of the autonomous driving is similar to that of the human driver. Refer to FIG. 2. A behavior planner 10221 is responsible for the high-level decision, for example, lane changing or lane keeping. A lateral planner 10222 is responsible for planning a driving trajectory, and a longitudinal planner 10223 is responsible for planning a driving speed. A controller 10224 operates the steering component 1101, the throttle valve 1102, the brake component 1103, or the accelerator 1104 based on the planned driving trajectory and speed, so that the ego vehicle travels based on the planned driving trajectory and speed. Specifically, when obtaining a decision instruction (for example, staying in a lane) delivered by the behavior planner 10221, the lateral planner 10222 may perform lateral path planning, and transfer a planned lateral path to the longitudinal planner 10223. The longitudinal planner 10223 may perform speed planning based on the lateral path. The controller 10224 may send a control instruction to the steering component 1101, the throttle valve 1102, the brake component 1103, or the accelerator 1104 based on a planning result of the lateral planner 10222 and a planning result of the longitudinal planner 10223.

More specifically, as shown in FIG. 2, the lateral planner 10222 may further include a reference path planner (reference path planner), an obstacle avoidance planner (obstacle avoidance planner), a trajectory smoother (trajectory smoother), and a collision checker. For example, the collision checker may be specifically a model-based collision checker (model-based collision checker). The reference path planner may determine, based on a decision instruction delivered by the behavior planner 10221, ego vehicle perception information, map information, and the like, a driving reference trajectory of the ego vehicle in a time period T1. The time period T1 may include a current moment. For example, the time period T1 includes duration of N seconds before the current moment and duration of M seconds after the current moment. A value of the time period T1, a value of N, and a value of M may be preset. It can be understood that a driving reference trajectory before the current moment is an actual driving trajectory or a historical driving trajectory of the ego vehicle. A driving reference trajectory after the current moment is a planned or predicted trajectory. The driving reference trajectory may include a plurality of waypoints, and the plurality of waypoints are located on the driving reference trajectory. In other words, connection lines between adjacent waypoints in the plurality of waypoints form the driving reference trajectory. For example, the driving reference trajectory may coincide with a middle line of a lane in which the ego vehicle is located.

The reference path planner may perform the method for determining the lateral planning constraint provided in this embodiment of this invention, and output the determined lateral planning constraint to the obstacle avoidance planner, so that the obstacle avoidance planner, the trajectory smoother, and the collision checker perform lateral path planning within the lateral planning constraint.

This embodiment of this invention provides a solution for determining the lateral planning constraint. Therefore, a process of determining the lateral planning constraint is specifically described below. For a process of performing lateral path planning within the lateral planning constraint, refer to the description in the conventional technology.

The following uses an example to describe the method for determining the lateral planning constraint provided in embodiments of this invention with reference to accompanying drawings. In embodiments of this invention, the "lateral" refers to a direction perpendicular to a driving direction of the vehicle. The "longitudinal" refers to the driving direction of the vehicle.

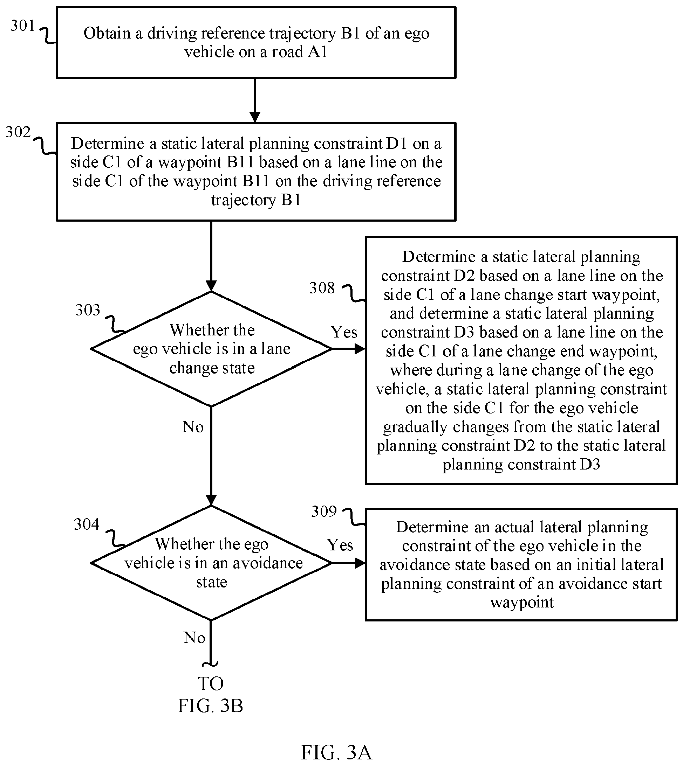

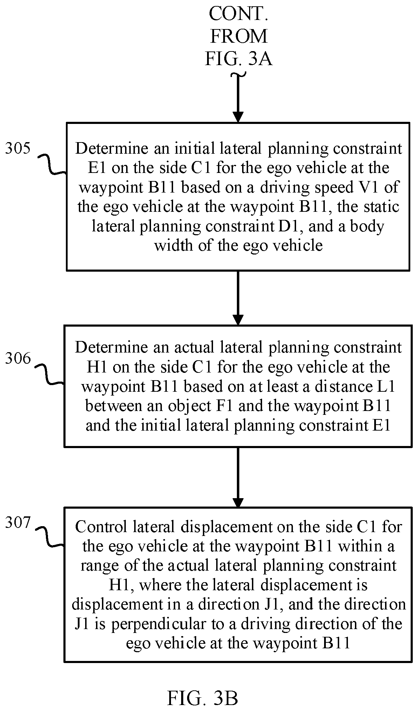

In some embodiments, the method for determining the lateral planning constraint may include steps shown in FIG. 3A and FIG. 3B. Details are as follows.

The reference path planner may perform step 301 to obtain a driving reference trajectory B1 of the ego vehicle on a road A1. For example, the reference path planner may determine the driving reference trajectory B1 based on map information (for example, the map information may be obtained from the high definition map 10225). For example, the driving reference trajectory B1 may be determined by another application or component, and then the reference path planner may obtain the driving reference trajectory B1 from the another application or component. For a specific process, refer to the description in the conventional technology, and details are not described herein again. It can be understood that the driving reference trajectory B1 has a plurality of waypoints. In other words, the driving reference trajectory is obtained by connecting adjacent waypoints in the plurality of waypoints.

The reference path planner may determine a lateral planning constraint of a waypoint in the plurality of waypoints of the driving trajectory B1. A waypoint B11 in the plurality of waypoints is used as an example. As shown in FIG. 3A and FIG. 3B, the reference path planner may perform step 302, and determine a static lateral planning constraint D1 on a side C1 of the waypoint B11 based on a lane line on the side C1 of the waypoint B11 of the driving reference trajectory B1. The side C1may be a left side or a right side. It can be understood that the waypoint B11 is located in a lane or in a virtual lane (for example, the waypoint B11 is located at an intersection, and the reference path planner may determine the virtual lane based on map information). Thus, left and right sides of the waypoint B11 each are provided with a lane line. The lane line on the side C1 of the waypoint B11 is a lane line located in an intersection point between a plumb-line made from the waypoint B11 to the lane line on the side C1 of a lane in which the waypoint B11 is located and the lane line on the side C1 of the lane. When the waypoint B11 is located in the virtual lane, a lane line on both sides of the waypoint B11 may be defaulted as a dashed line.

The dashed line may also be referred to as a changeable lane line. According to traffic laws and regulations, the ego vehicle can change a lane at the dashed line. Opposite to the dashed line is a solid line, and the solid line may also be referred to as an unchangeable lane line. According to the traffic laws and regulations, the ego vehicle is not allowed to change a lane at the solid line.

In an illustrative example, the static lateral planning constraint D1 may include a soft static lateral planning constraint (soft margin) D11 and a hard static lateral planning constraint (hard margin) D12. A width of the hard static lateral planning constraint is greater than or equal to that of the soft static lateral planning constraint.

For example, if the lane line on the side C1 of the waypoint B11 is the solid line, the width of the soft static lateral planning constraint D11 is less than a half width of the lane in which the waypoint B11 is located. A center line of the lane may divide the lane into two single-sided lanes, and a width of each single-sided lane is the half width of the lane. Therefore, in this embodiment of this invention, the half width of the lane is equal to the width of the single-sided lane, and a half of the lane may also be referred to as the single-sided lane. In an example, a width W1 may be subtracted from the width of the single-sided lane (or the half width of the lane) of the lane in which the waypoint B11 is located, to obtain the soft static lateral planning constraint D11. The width W1 may be preset, for example, may be 0.3 meters, 0.4 meters, or 0.5 meters, which is not listed one by one herein.

If the lane line on the side C1 of the waypoint B11 is the solid line, the width of the hard static lateral planning constraint D12 is equal to the width of the soft static lateral planning constraint D12.

For example, if the lane line on the side C1 of the waypoint B11 is the dashed line, the soft static lateral planning constraint D11 is less than the half width of the lane in which the waypoint B11 is located. In an example, a width W1 may be subtracted from the width of the single-sided lane (or the half width of the lane) of the lane in which the waypoint B11 is located, to obtain the soft static lateral planning constraint D11. For the width W1, refer to the foregoing description. Details are not described herein again.

If the lane line on the side C1 of the waypoint B11 is the dashed line, the width of the hard static lateral planning constraint D12 is greater than the width of the soft static lateral planning constraint D12. For example, the soft static lateral planning constraint D11 may be added with a width W2, to obtain the hard static lateral planning constraint D12. The width W1 may be preset, for example, may be 0.4 meters, 0.8 meters, or 1.2 meters, which is not listed one by one herein. For example, the width W2 may be greater than the width W1. In other words, when the lane line on the side C1 of the waypoint B11 is the dashed line, that is, when the ego vehicle can cross the lane line on the side C1 of the waypoint B11, the width of the hard static lateral planning constraint on the side C1 of the waypoint B11 may be set to be large, so that the ego vehicle can perform a lateral movement on the lane on the side C1 of the waypoint B11. This increases an adjustable range of the lateral movement.

In a specific example, the ego vehicle may be set to normally travel on a rightmost lane, and a width of the current lane is 3.6 meters. The left side of the lane is the solid line and a lane change is not allowed. A right lane side line of the current lane of the ego vehicle is the dashed line, and a lane change can be performed. At 80 m to 120 m in front of the ego vehicle, the dashed line becomes the solid line, and an area becomes an unchangeable lane area. An area beyond 120 m in front of the ego vehicle is an intersection area. A length of the driving reference trajectory ends at 150 meters. In this case, both soft static lateral planning constraints on the left side and hard static lateral planning constraint on the left side of all waypoints within 120 meters from the ego vehicle on the driving reference trajectory are 3.6/2-0.4=1.4 meters. All soft static lateral planning constraints on the right side of waypoints that are on the driving reference trajectory and that are located in a right changeable lane area (the waypoints within 80 m from the ego vehicle) are 3.6/2-0.4=1.4 meters, and hard static lateral planning constraints on the right side are 1.4+1.2=2.6 meters. Soft static lateral planning constraints and hard static lateral planning constraints on the right side of waypoints within 80 m to 120 m from the ego vehicle are 3.6/2-0.4=1.4 meters. Soft static lateral planning constraints on the left side and soft static lateral planning constraints on the right side of waypoints beyond 120 m from the ego vehicle are 3.6/2-0.4=1.4 meters, and the hard static lateral planning constraint on the left side and the hard static lateral planning constraint on the right side are 1.4+1.2=2.6 meters.

It should be noted that "front" refers to a direction in which a front of the ego vehicle points, and "behind" refers to a direction in which a rear of the ego vehicle points.

Still refer to FIG. 3A and FIG. 3B. The reference path planner may perform step 303, to determine whether the ego vehicle is in a lane change state. For example, the reference path planner may determine, based on a decision instruction recently received by the reference path planner from the behavior planner 10221, whether the ego vehicle is in the lane change state. If the decision instruction recently received from the behavior planner 10221 is a lane change, it may be determined that the ego vehicle is in the lane change state. If the decision instruction recently received from the behavior planner 10221 is lane keeping, it may be determined that the ego vehicle is not in the lane change state.

A determining result in step 303 may be set to no, that is, the ego vehicle is not in the lane change state. The reference path planner may further perform step 304, to determine whether the ego vehicle is in an avoidance state.

For example, it can be understood that the driving reference trajectory B1 is not an actual driving trajectory of the ego vehicle. During driving, the ego vehicle may deviate from the driving reference trajectory B1 due to reasons such as avoiding an obstacle. It may be determined whether a nearest distance between a current actual position of the ego vehicle and the driving reference trajectory B1 is greater than a preset threshold Y1, so that it can be determined whether an actual driving route of the ego vehicle deviates from the driving reference trajectory B1. If the nearest distance between the current actual position of the ego vehicle and the driving reference trajectory B1 is greater than the preset threshold Y1, it can be considered that the actual driving route of the ego vehicle deviates from the driving reference trajectory B1, and the ego vehicle performs an avoidance action, that is, the ego vehicle is in the avoidance state. If the nearest distance between the current actual position of the ego vehicle and the driving reference trajectory B1 is less than or equal to the preset threshold Y1, it can be considered that the actual driving route of the ego vehicle does not deviate from the driving reference trajectory B1, and the ego vehicle is not in the avoidance state. In an example, a plumb-line may be made from an actual position of the ego vehicle to the driving reference trajectory B1, to obtain an intersection point of the plumb-line and the driving reference trajectory B1, and then a distance between the actual position of the ego vehicle and the intersection point may be determined, to obtain a nearest distance between the actual position of the ego vehicle and the driving reference trajectory B1. The threshold Y1 may be a preset value, for example, may be 0.2 meters, or 0.3 meters, which is not listed one by one herein.

For example, a lateral deviation between a final driving trajectory recently output by the lateral planner 10222 (for example, outputting to the longitudinal planner 10223) and the driving reference trajectory B1 may be determined. It can be understood that the lateral planner 10222 may output the final driving trajectory based on a preset periodicity. For a periodicity, the final driving trajectory output by the lateral planner 10222 is a final driving trajectory further processed by the obstacle avoidance planner, the trajectory smoother, and the collision checker on the basis of determining the driving reference trajectory and the lateral planning constraint by the reference path planner. The reference path planner may obtain the final driving trajectory recently output by the lateral planner 10222, and compare the lateral deviation between the final driving trajectory and the driving reference trajectory B1. If the lateral deviation is greater than a preset threshold Y2, it can be considered that the actual driving route of the ego vehicle deviates from the driving reference trajectory B1, and the ego vehicle performs an avoidance action, that is, the ego vehicle is in the avoidance state. If the lateral deviation is less than or equal to the preset threshold Y2, it can be considered that the actual driving route of the ego vehicle does not deviate from the driving reference trajectory B1, and the ego vehicle is not in the avoidance state. In an example, a plumb-line may be made from any point b1 of the final driving trajectory to the driving reference trajectory B1, to obtain an intersection point between the plumb-line and the driving reference trajectory B1, and then a distance between the intersection point and the point b1 is calculated. By repeating the foregoing solution, distances from all points of the final driving trajectory to the driving reference trajectory B1 can be obtained. Among the distances from all points of the final driving trajectory to the driving reference trajectory B1, a maximum distance is determined, and the maximum distance is used as the lateral deviation between the final driving trajectory and the driving reference trajectory B1. The threshold Y2 may be a preset value, for example, may be 0.2 meters, or 0.3 meters, which is not listed one by one herein.

Therefore, based on the foregoing solution, whether the ego vehicle is in the avoidance state can be determined in step 304.

A determining result in step 304 may be set to no, that is, the ego vehicle is not in the avoidance state. The reference path planner may further perform step 305, to determine an initial lateral planning constraint E1 on the side C1 for the ego vehicle at the waypoint B11 based on a driving speed V1 of the ego vehicle at the waypoint B11, the static lateral planning constraint D1, and a body width of the ego vehicle.

For example, it can be understood that when step 305 is performed, the ego vehicle may not actually travel to the waypoint B11. The driving speed V1 of the ego vehicle at the waypoint B11 in step 305 may be a planned or predicted speed. For example, the longitudinal planner 10223 may predict, based on perception information of the vehicle, the final driving trajectory recently output by the lateral planner 10222, traffic road condition information on the road A1, and the like, a speed at which the ego vehicle travels to the waypoint B11, to obtain the driving speed V1. For a specific solution of predicting a speed of the ego vehicle at a waypoint, refer to the description in the conventional technology. Details are not described herein again.

In an illustrative example, inertial filtering may be performed on the driving speed V1, to obtain a filtered driving speed V1. The inertial filtering may be one-stage inertial filtering. In an example, a driving speed V2 of a waypoint B12, on the driving reference trajectory B1, that is adjacent to the waypoint B11 and that is located before the waypoint B11 may be obtained. The driving speed V2 may be a speed that is predicted by the longitudinal planner 10223 and at which the ego vehicle travels to the waypoint B12, or may be an actual driving speed of the ego vehicle at the waypoint B12. Then, the inertial filtering may be performed on the driving speed V1 based on the driving speed V2 and an inertial filtering coefficient. In an example, an inertial filtering coefficient during ego vehicle acceleration may be set to 0.97, and an inertial filtering coefficient during ego vehicle deceleration may be set to 0.90.

In an illustrative example, the driving speed V1 (or the filtered driving speed V1) and a preset speed threshold v1 may be compared. If the driving speed V1 (or the filtered driving speed V1) is less than or equal to the speed threshold v1, it may be determined that the initial lateral planning constraint E1 is equal to the static lateral planning constraint D1. For example, as described above, the static lateral planning constraint D1 includes the soft static lateral planning constraint D11 and the hard static lateral planning constraint D12. Correspondingly, the initial lateral planning constraint E1 includes a soft initial lateral planning constraint E11 and a hard initial lateral planning constraint E12. The initial lateral planning constraint E1 is equal to the static lateral planning constraint D1. Specifically, the soft initial lateral planning constraint E11 is equal to the soft static lateral planning constraint D11, and the hard initial lateral planning constraint E12 is equal to the hard static lateral planning constraint D12. The speed threshold v1 may be 20 km/h, 25 km/h, 30 km/h, or the like. In specific implementation, a value of the speed threshold v1 may be set based on experience or an experiment.

In an illustrative example, the driving speed V1 (or the filtered driving speed V1) and a preset speed threshold v2 may be compared. If the driving speed V1 (or the filtered driving speed V1) is greater than or equal to the speed threshold v2, it may be determined that the initial lateral planning constraint E1 is equal to a half body width of the ego vehicle. For example, the initial lateral planning constraint E1 includes the soft initial lateral planning constraint E11 and the hard initial lateral planning constraint E12. The initial lateral planning constraint E1 is equal to the half body width of the ego vehicle. Specifically, both the soft initial lateral planning constraint E11 and the hard initial lateral planning constraint E12 are equal to the half body width of the ego vehicle. The speed threshold v2 is greater than the speed threshold v1. In an example, the speed threshold v2 may be 70 km/h, 75 km/h, 80 km/h, or the like. In specific implementation, a value of the speed threshold v2 may be set based on experience or an experiment.

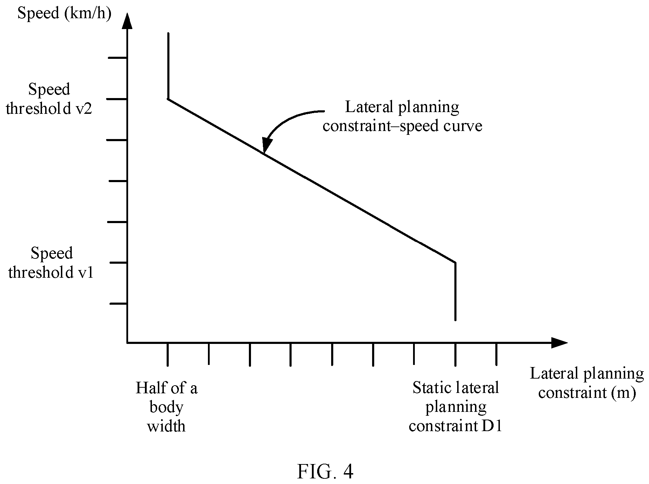

In an illustrative example, if the driving speed V1 (or the filtered driving speed V1) is greater than the speed threshold v1 and less than the speed threshold v2, the initial lateral planning constraint E1 is between the static lateral planning constraint D1 and the half body width of the ego vehicle, and is negatively correlated with the driving speed V1 (or the filtered driving speed V1). For example, negatively correlated is specifically a negative correlation of a first-order linear change. The initial lateral planning constraint E1 may be determined by using a lateral planning constraint-speed curve shown in FIG. 4. Specifically, it may be determined that a vertical coordinate on the lateral planning constraint-speed curve is a coordinate point of the driving speed V1 (or the filtered driving speed V1), and a lateral coordinate of the coordinate point is used as the initial lateral planning constraint E1.

In an example of this example, the initial lateral planning constraint E1 includes the soft initial lateral planning constraint E11 and the hard initial lateral planning constraint E12. If the driving speed V1 (or the filtered driving speed V1) is greater than the speed threshold v1 and less than the speed threshold v2, the soft initial lateral planning constraint E11 is between the soft static lateral planning constraint D11 and the half body width of the ego vehicle, and is negatively correlated with the driving speed V1 (or the filtered driving speed V1). In addition, the hard initial lateral planning constraint E12 is between the hard static lateral planning constraint D12 and the half body width of the ego vehicle, and is negatively correlated with the driving speed V1 (or the filtered driving speed V1).

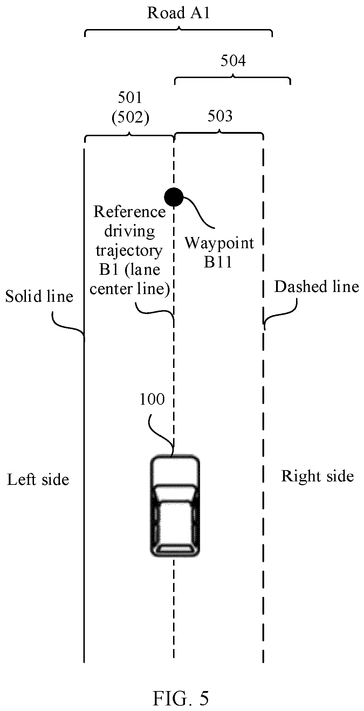

In a specific example, in a scenario shown in FIG. 5, a width of the road A1 may be set to 3.6 meters, the width W1 may be set to 0.4 meters, the width W2 may be set to 1.2 meters, and the body width of the ego vehicle may be set to 2 meters. A soft static lateral planning constraint 501 on the left side of the waypoint B11 is 3.6/2-0.4=1.4 meters. The left side of the waypoint B11 is a solid line, and a hard static lateral planning constraint 502 on the left side of the waypoint B11 is also 1.4 meters. A soft static lateral planning constraint 503 on the right side of the waypoint B11 is 3.6/2-0.4=1.4 meters. A hard static lateral planning constraint 504 on the right side is 1.4+1.2=2.6 meters. The driving speed V2 is 26.0 km/h, and the filtered driving speed V1 is 25.2 km/h. It can be learned that the ego vehicle is in an acceleration state when the ego vehicle is at the waypoint B1. The inertial filtering coefficient during ego vehicle acceleration may be set to 0.97. A speed after inertial filtering is performed on the driving speed V2 is 26.0 km/h×(1-0.97)+25.2 km/h×0.97=25.224 km/h. The speed threshold v1 may be set to 20 km/h, and the speed threshold v2 may be set to 70 km/h. A first-order linear change is performed based on the driving speed V1 (that is, 25.224 km/h) obtained after the inertia filtering, to obtain that both a soft initial lateral planning constraint and a hard initial lateral planning constraint on the left side of the waypoint B11 are 1.36 meters, and to obtain that a soft initial lateral planning constraint on the right side of the waypoint B11 is 1.36 meters, and a hard initial lateral planning constraint on the right side is 2.36 meters.

When an object F1 of concern to the ego vehicle exists on the road A1, the reference path planner may further perform step 306, to determine an actual lateral planning constraint H1 on the side C1 for the ego vehicle at the waypoint B11 based on at least a distance L1 between the object F1 and the waypoint and the initial lateral planning constraint E1. For example, the initial lateral planning constraint E1 may include the soft initial lateral planning constraint E11 and the hard initial lateral planning constraint E12. Correspondingly, the actual lateral planning constraint H1 may include a soft actual lateral planning constraint H11 and a hard actual lateral planning constraint H12.

The object F1 may be an object that affects a driving process of the ego vehicle when the ego vehicle travels to the waypoint B11. Therefore, the ego vehicle needs to concern the object F1, and adjust a driving policy, for example, a driving speed and a driving route, based on the object F1. The object F1 may also be understood as an obstacle. In other words, there is a risk of collision between the object F1 and the ego vehicle.

For example, the object F1 may be specifically an object that needs to be concerned when the ego vehicle travels to the waypoint B11. That is, the object F1 may be an object that needs to be considered when the ego vehicle travels to the waypoint B11, to avoid a collision with the object F1.

Next, step 305 is described by using examples with reference to different application scenarios.

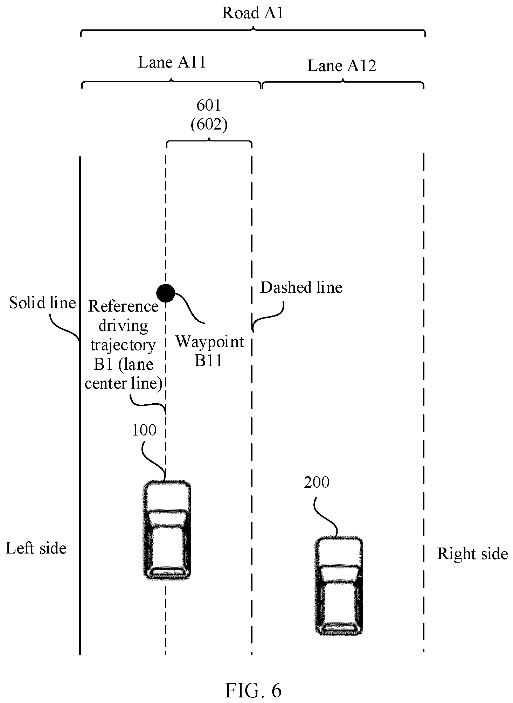

FIG. 6 shows an application scenario. In this scenario, the ego vehicle, that is, the vehicle 100, travels on a lane A11 of the road A1. The road A1 further includes a lane A12 that is located on a right side of the lane A11 and that is adjacent to the lane A11. A vehicle 200 travels on the lane A12. It can be understood that, if the vehicle 100 crosses the lane, there is a risk of collision between the vehicle 100 and the vehicle 200, and therefore, a lateral planning constraint on the right side of the vehicle 100 needs to be shrank.

In this scenario, a distance L1 between the waypoint B11 and the vehicle 200, a moving speed V3 of the vehicle 200, a moving direction M1 of the vehicle 200, a moving speed V4 of the vehicle 100, and a moving direction M2 of the vehicle 100 may be determined. Then, a risk degree of collision between the vehicle 100 and the vehicle 200 is determined based on the distance L1, the moving speed V3 of the vehicle 200, the moving direction M1 of the vehicle 200, the moving speed V4 of the vehicle 100, and the moving direction M2 of the vehicle 100. If the determined collision risk degree is less than a preset safety threshold, the hard initial lateral planning constraint E12 on the right side of the vehicle 100 may be reduced, so that a reduced hard initial lateral planning constraint E12 is less than or equal to a half width of a lane (that is, the lane A11) on which the waypoint B11 is located. For example, a width of the hard initial lateral planning constraint E12 may be reduced to a width of the soft initial lateral planning constraint E11. Then, a reduced hard initial lateral planning constraint E12 is used as the hard actual lateral planning constraint H12.

The moving speed V3 of the vehicle 200 may be a predicted moving speed of the vehicle 200 when the vehicle 100 travels to the waypoint B11. The moving direction M1 of the vehicle 200 may be a predicted moving direction of the vehicle 200 when the vehicle 100 travels to the waypoint B11. The moving speed V4 of the vehicle 100 may be a predicted moving speed of the vehicle 100 when the vehicle 100 travels to the waypoint B11. The moving direction M2 may be a predicted moving direction of the vehicle 100 when the vehicle 100 travels to the waypoint B11.

In an example, the determined collision risk degree may be time to collision (time to collision, TTC). In an example, it may be determined, based on a difference between the moving speed V3 and the moving speed V4, the moving direction of the vehicle 200, and the moving direction of the vehicle 100, that the vehicle 100 and the vehicle 200 are approaching each other gradually. It may be determined, based on the distance L1, and the difference between the moving speed V3 and the moving speed V4, that how long the vehicle 100 and the vehicle 200 collide with each other when the moving directions and the moving speeds of the vehicle 100 and the vehicle 200 remain unchanged. Then, the time to collision is obtained. In another example, the time to collision between the vehicle 100 and the vehicle 200 may be determined based on a solution in the conventional technology. Details are not described herein again.

The safety threshold may include a time threshold T1. The time threshold T1 may be referred to as a time to collision safety threshold. The time threshold T1 may be 4.5 seconds, 5 seconds, 6 seconds, or the like. Developers can set the time threshold T1. When the determined time to collision is less than the time threshold T1, the hard initial lateral planning constraint E12 on the right side of the vehicle 100 may be reduced. When the time to collision is greater than or equal to the time threshold T1, the hard initial lateral planning constraint E12 on the right side of the vehicle 100 may not be reduced.

In another example, the determined collision risk degree may be head way time (head way time, HWT). In an example, the head way time of the vehicle 100 and the vehicle 200 may be determined based on the distance L1, the moving speed V3, and the moving speed V4. In another example, the head way time of the vehicle 100 and the vehicle 200 may be determined based on a solution in the conventional technology. Details are not described herein again.

The safety threshold may include a time threshold T2. The time threshold T2 may be referred to as a head way time safety threshold. The time threshold T2 may be 0.4 seconds, 0.5 seconds, 0.6 seconds, or the like. Developers can set the time threshold T2. When the determined head way time is less than the time threshold T2, the hard initial lateral planning constraint E12 on the right side of the vehicle 100 may be reduced. When the head way time is greater than or equal to the time threshold T2, the hard initial lateral planning constraint E12 on the right side of the vehicle 100 may not be reduced.

In still another example, the determined collision risk degree may include the time to collision and the head way time. Correspondingly, the safety threshold may include the time threshold T1 and the time threshold T1. When the time to collision is less than the time threshold T1 and/or the head way time is less than the time threshold T2, the hard initial lateral planning constraint E12 on the right side of the vehicle 100 may be reduced. When the time to collision is greater than or equal to the time threshold T1 and the head way time is greater than or equal to the time threshold T2, the hard initial lateral planning constraint E12 on the right side of the vehicle 100 may not be reduced.

In an example, it may be set that when the vehicle 100 is predicted to travel to the waypoint B11, the vehicle 200 is 10 meters behind the vehicle 100, and the moving speed of the vehicle 200 is 45 km/h, to determine that the time to collision between the vehicle 200 and the vehicle 100 is 1.9 seconds, and the head way time between the vehicle 200 and the vehicle 100 is 0.8 seconds. The head way time between the vehicle 200 and the vehicle 100 is 0.5 seconds greater than the head way time safety threshold, but the time to collision between the vehicle 200 and the vehicle 100 is 4.5 seconds less than the time to collision safety threshold. In this case, it is determined that the right side of the waypoint B11 is unsafe and has a high collision risk, and a width of an initial hard lateral planning constraint 602 on the right side of the waypoint B11 is reduced to a width of a soft initial lateral planning constraint 601 on the right side. For example, if the width of the soft initial lateral planning constraint on the right side is 1.36 meters, the width of the hard initial lateral planning constraint on the right side of the waypoint B11 is reduced to 1.36 meters.

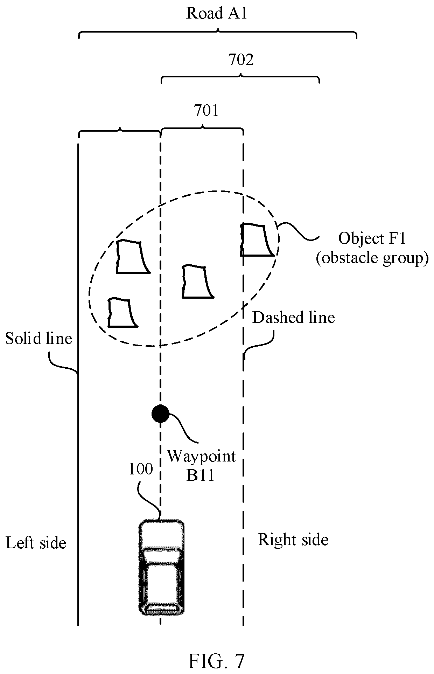

FIG. 7 shows another application scenario. The object F1 and the waypoint B11 are in a same lane, or the object F1 blocks a lane in which the waypoint B11 is located. The vehicle 100 gradually approaches the object F1 during driving. Therefore, the vehicle 100 needs to plan how to avoid the object F1.

For example, the object F1 may be a single obstacle.

For example, as shown in FIG. 7, the object F1 may be an obstacle group including a plurality of obstacles. The plurality of obstacles cannot meet a kinematic constraint of the vehicle 100, and the vehicle 100 cannot find a trajectory that can pass through gaps among the plurality of obstacles. Thus, the plurality of obstacles can be treated as the single obstacle.

A lane line on the side C1 of the waypoint B11 may be set to a dashed line, namely, a changeable lane line. A lateral offset P1 between the object F1 and the waypoint B11 may be determined. The lateral offset P1 is an offset or a distance in a direction J1 of a boundary of the side C1 of the object F1 relative to the waypoint B11. The direction J1 is perpendicular to a driving direction of the vehicle 100 at the waypoint B11. For example, the lateral offset P1 may be an offset or a distance in the direction J1 of the C1 boundary of the object F1 relative to the waypoint B11. The boundary of the side C1 may be a farthest point of the side C1, or a farthest side C1 (the side C1 is a right side or a left side).

The actual lateral planning constraint H1 includes the soft actual lateral planning constraint H11 and the hard actual lateral planning constraint H12. To avoid the object F1, the vehicle 100 needs to determine the hard actual lateral planning constraint H12. A solution is specifically as follows.

A soft initial lateral planning constraint on the side C1 of the waypoint B11 may be subtracted from the lateral offset P1, that is, the soft initial lateral planning constraint E11 may be subtracted from the lateral offset P1, to obtain a difference Q1. The difference Q1 is added to the body width of the vehicle 100 to obtain a sum S1.

In an example, it may be determined whether the sum S1 is less than or equal to a lateral expansion width. The lateral expansion width may refer to a lateral distance that a vehicle can cross a lane line and intrude into an adjacent lane within a limit permitted by traffic laws and regulations. The lateral expansion width may be preset, for example, may be 2.8 meters, 3 meters, or 3.2 meters, which is not listed one by one herein. If the sum S1 is less than or equal to the lateral expansion width, the soft initial lateral planning constraint (that is, the soft initial lateral planning constraint E11) on the side C1 of the waypoint B11 may be added to the lateral expansion width, to obtain a sum, and the obtained sum may be used as the hard actual lateral planning constraint H12.

In an example, a lateral safety distance may be preset. For example, the lateral safety distance indicates an allowable lateral error when the vehicle passes through an obstacle, so that the vehicle does not collide with the obstacle when a lateral error within a range of the lateral safety distance occurs. For example, the lateral safety distance indicates a distance that should be maintained from the obstacle when the vehicle safely passes through the obstacle. In an example, the safety distance may be 0.5 meters, 0.6 meters, or the like, which is not listed one by one herein. In this example, it may be determined whether a sum of the sum S1 and the safety distance is less than or equal to the lateral expansion width. If the sum of the sum S1 and the lateral safety distance is less than or equal to the lateral expansion width, the soft initial lateral planning constraint (that is, the soft initial lateral planning constraint E11) on the side C1 of the waypoint B11 may be added to the lateral expansion width, to obtain a sum, and the obtained sum may be used as the hard actual lateral planning constraint H12.

In an example, the soft initial lateral planning constraint (that is, the soft initial lateral planning constraint E11) on the side C1 of B11 may be used directly as the soft actual lateral planning constraint.

Next, in a specific example, a scenario shown in FIG. 7 is described.

In the scenario shown in FIG. 7, there are no other vehicles around the vehicle 100 that need to shrink the hard lateral planning constraint. That is, there are no other vehicles coming toward the vehicle 100 or no other vehicles passing over the vehicle 100 in an adjacent lane of a lane in which the vehicle 100 is located. Alternatively, there is another vehicle coming toward or passing over the ego vehicle in the lane in which the vehicle 100 is located. Both time to collision between the another vehicle and the vehicle 100 and head way time of the another vehicle and the vehicle 100 meet a safety requirement. Therefore, there is no need to shrink the hard lateral planning constraint.

Obstacles of interest or objects of concern are filtered. Specifically, an obstacle that is located in front of the vehicle 100 and whose speed is faster than that of the vehicle 100 may be removed. An obstacle having time to collision that is with the vehicle 100 at the waypoint B11 and that is greater than 4.5 seconds is removed. An obstacle whose driving trajectory does not interfere with the lane in which the vehicle 100 is located is removed. Another vehicle with a lateral speed is removed. The remaining obstacles are used as obstacles of interest or objects of concern. Coordinates of the objects of concern in a frenet coordinate system are calculated, and the objects of concern are sorted in ascending order of a longitudinal distance from the waypoint B11. The obstacles may then be clustered based on the kinematic constraint of the vehicle 100. As shown in FIG. 7, longitudinal distances between all obstacles in the obstacle group and the waypoint B11 may be set to be within 20 meters to 30 meters, and if the vehicle 100 cannot find a trajectory to pass through the obstacle group based on the kinematic constraint of the vehicle 100, all the obstacles of the obstacle group shown in FIG. 7 are clustered. The clustered obstacles are treated as a single obstacle. It may be set that starting points of vertical coordinates of the clustered obstacles relative to the waypoint B11 are 23 meters away from the waypoint B11 in a longitudinal direction, and end points are 28 meters away from the waypoint B11 in the longitudinal direction. Starting points of lateral coordinates of the clustered obstacles relative to the waypoint B11 are -1.5 meters away from the waypoint B11 in a lateral direction, and are 0.14 meters (a right side) greater than a soft initial lateral planning constraint on the right side. End points of the lateral coordinates are 1.6 meters (a left side) away from the waypoint B11 in the lateral direction. The left side of the lane in which the waypoint B11 is located is a solid line, and the right side is a dashed line. Because the left side is a solid line area, the vehicle 100 cannot pass through the left side of the clustered obstacles. When the vehicle 100 can safely pass through an obstacle, it may be set that a lateral safety distance between the vehicle 100 and the obstacle is 0.5 meters, and the body width of the vehicle 100 is 2 meters. Then, a width of a soft initial lateral planning constraint 701 on the right side needs to be exceeded by 0.14+0.5+2.0=2.64 meters when the vehicle 100 is planned to pass through the front obstacle. A maximum value of an expansion hard lateral planning constraint of the vehicle 100 may be set to 2.8 meters. That is, a lateral expansion width is 2.8 meters. Then, when the hard lateral planning constraint on the right side expands, the vehicle 100 may be planned to pass through front clustered obstacles. In this case, the hard lateral planning constraint on the right side is expanded to 1.36+2.8=4.16 meters, that is, a hard actual lateral planning constraint 702 on the right side is determined to be 4.16 meters.

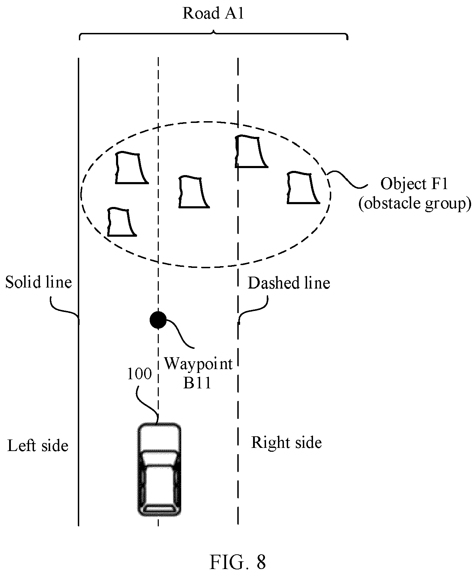

FIG. 8 shows another application scenario. In this scenario, the object F1 and the waypoint B11 are in a same lane, or the object F1 blocks a lane in which the waypoint B11 is located. The vehicle 100 gradually approaches the object F1 during driving. Therefore, the vehicle 100 needs to plan how to avoid the object F1. For the object F1, refer to the foregoing description of the embodiment shown in FIG. 7. Details are not described herein again.

A lane line on the side C1 of the waypoint B11 may be set to a dashed line, namely, a changeable lane line. The other side of the waypoint B11 may be set to be a solid line, namely, an unchangeable lane line. The other side is an opposite side of C1. Specifically, if the side C1 is a right side, the other side is a left side; and if the side C1 is a left side, the other side is a right side. A lateral offset P1 between the object F1 and the waypoint B11 may be determined. For details, refer to the description of the embodiment shown in FIG. 7. Details are not described herein again.

The actual lateral planning constraint H1 includes the soft actual lateral planning constraint H11 and the hard actual lateral planning constraint H12. To avoid the object F1, the vehicle 100 needs to determine the hard actual lateral planning constraint H12. A solution is specifically as follows.

A soft initial lateral planning constraint on the side C1 of the waypoint B11 may be subtracted from the lateral offset P1, that is, the soft initial lateral planning constraint E11 may be subtracted from the lateral offset P1, to obtain a difference Q1. The difference Q1 is added to the body width of the vehicle 100 to obtain a sum S1.

In an example, it may be determined whether the sum S1 is less than or equal to a lateral expansion width. If the sum S1 is greater than the lateral expansion width, a hard initial lateral planning constraint (that is, the hard initial lateral planning constraint E12) on the side C1 of the waypoint B11 is used as the hard actual lateral planning constraint H12.

In an example, a safety distance may be preset. For the safety distance, refer to the foregoing description of the embodiment shown in FIG. 7. Details are not described herein again. In this example, it may be determined whether a sum of the sum S1 and the safety distance is less than or equal to the lateral expansion width. If the sum of the sum S1 and the safety distance is greater than the lateral expansion width, the hard initial lateral planning constraint (that is, the hard initial lateral planning constraint E12) on the side C1 of the waypoint B11 is used as the hard actual lateral planning constraint H12.

In an example, the soft initial lateral planning constraint (that is, the soft initial lateral planning constraint E11) on the side C1 of B11 may be directly used as the soft actual lateral planning constraint.

That is, in the application scenario shown in FIG. 8, when the vehicle 100 is located at the waypoint B11, a trajectory at which the object F1 can be avoided cannot be planned. In other words, the object F1 directly blocks a driving direction of the vehicle 100 at the waypoint B11. For this reason, an initial lateral planning constraint of the waypoint B11 may be directly output, so that a subsequent planner no longer considers how the vehicle 100 should avoid the object F1 when the vehicle 100 is located at the waypoint B11.

In some embodiments, the vehicle 100 may also plan or determine a longitudinal planning constraint of the waypoint B11 when the object F1 directly blocks the driving direction of the vehicle 100 at the waypoint B11. The longitudinal planning constraint may also be referred to as a longitudinal avoidable length constraint. When the vehicle 100 travels to the waypoint B11, a driving policy may be planned by considering only road condition information of a longitudinal planning constraint range of the waypoint B11. The road condition information may include one or more of traffic signal light information, road speed limit information, lane change and neutral gear information, and obstacle information. The driving policy may include a driving trajectory and/or a driving speed.

A solution for determining the longitudinal planning constraint of the waypoint B11 is specifically as follows.

A longitudinal distance L2 between the waypoint B11 and the object F1 may be determined. The longitudinal distance L2 is specifically a distance in the driving direction when the vehicle travels to the waypoint B11. In an example, the longitudinal distance L2 may be obtained by using the frenet coordinate system. The longitudinal distance L2 may be a distance, in a longitudinal direction, between a starting point of a vertical coordinate of the object F1 in the frenet coordinate system and the waypoint B11. The longitudinal direction is a direction in which the vehicle travels to the waypoint B11. In an example, the longitudinal distance L2 may be obtained by using a flood fill algorithm. The flood fill algorithm is specifically described below, and details are not described herein again.

A length L3 that the vehicle 100 can travel within duration T3 at a driving speed at which the vehicle 100 travels to the waypoint B11 may be determined.

In an illustrative example, the longitudinal distance L2 and the length L3 may be compared. If the longitudinal distance L2 is less than the length L3, the longitudinal distance L2 may be determined as the longitudinal planning constraint of the waypoint B11. If the longitudinal distance L2 is greater than the length L3, the length L3 may be determined as the longitudinal planning constraint of the waypoint B11.

In an illustrative example, a longitudinal safety distance may be set. The longitudinal safety distance may be preset, for example, may be 2 meters, or 2.5 meters. The longitudinal safety distance may be subtracted from the longitudinal distance L2 to obtain a longitudinal distance L4. The longitudinal distance L4 and the length L3 may be compared. If the longitudinal distance L4 is less than the length L3, the longitudinal distance L4 may be determined as the longitudinal planning constraint of the waypoint B11. If the longitudinal distance L4 is greater than the length L3, the length L3 may be determined as the longitudinal planning constraint of the waypoint B11.

Next, in a specific example, a solution for determining the longitudinal planning constraint is described.

In the scenario shown in FIG. 8, there are no other vehicles around the vehicle 100 that need to shrink the hard lateral planning constraint. For example, there are no other vehicles coming toward the vehicle 100 or no other vehicles passing over the vehicle 100 in an adjacent lane of a lane in which the vehicle 100 is located. Alternatively, there is another vehicle coming toward or passing over the ego vehicle in the lane in which the vehicle 100 is located, and both time to collision between the another vehicle and the vehicle 100 and head way time of the another vehicle and the vehicle 100 meet a safety requirement. Therefore, there is no need to shrink the hard lateral planning constraint.

Obstacles of interest or objects of concern are filtered. Specifically, an obstacle that is located in front of the vehicle 100 and whose speed is faster than that of the vehicle 100 may be removed. An obstacle having time to collision that is with the vehicle 100 at the waypoint B11 and that is greater than 4.5 seconds is removed. An obstacle whose driving trajectory does not interfere with the lane in which the vehicle 100 is located is removed. Another vehicle with a lateral speed is removed. The remaining obstacles are used as obstacles of interest or objects of concern. Coordinates of the objects of concern in the frenet coordinate system are calculated, and the objects of concern are sorted in ascending order of the longitudinal distance from the waypoint B11. The obstacles may then be clustered based on the kinematic constraint of the vehicle 100. As shown in FIG. 7, longitudinal distances between all obstacles in the obstacle group and the waypoint B11 may be set to be within 20 meters to 30 meters, and if the vehicle 100 cannot find a trajectory to pass through the obstacle group based on the kinematic constraint of the vehicle 100, all the obstacles of the obstacle group shown in FIG. 7 are clustered. The clustered obstacles are treated as a single obstacle. It may be set that starting points of vertical coordinates of the clustered obstacles relative to the waypoint B11 are 23 meters away from the waypoint B11 in the longitudinal direction, and end points are 28 meters away from the waypoint B11 in the longitudinal direction. Starting points of lateral coordinates of the clustered obstacles relative to the waypoint B11 are -2.5 meters away from the waypoint B11 in the lateral direction, and are 1.14 meters (a right side) greater than a soft initial lateral planning constraint on the right side. End points of the lateral coordinates of the clustered obstacles relative to the waypoint B11 are 1.6 meters (a left side) away from the waypoint B11 in the lateral direction. The left side of the lane in which the waypoint B11 is located is a solid line type, and the right side is a dashed line type. Because the left side is a solid line area, the vehicle 100 cannot pass through the left side of the clustered obstacles. When the vehicle 100 can safely pass through an obstacle, it may be set that a lateral safety distance between the vehicle 100 and the obstacle is 0.5 meters, and the width of the ego vehicle is 2 meters. Then the width of the soft initial lateral planning constraint on the right side needs to be exceeded by 1.14+0.5+2.0=3.64 meters when the vehicle 100 is planned to pass through the front obstacle. A maximum value of the expansion hard lateral planning constraint may be set to 2.8 meters, that is, the lateral expansion width is 2.8 meters. Then, when the hard lateral planning constraint on the right side expands, the vehicle 100 cannot be planned to pass through front clustered obstacles. In this case, the hard initial lateral planning constraint on the right side is used as the hard actual lateral planning constraint on the right side. That is, a width of the hard actual lateral planning constraint on the right is 2.36 meters.

The object F1 may be set as a static obstacle, or an obstacle included in the object F1 may be set as a static obstacle.

The hard actual lateral planning constraint on the right side of waypoint B11 and the static obstacle may be projected into an occupancy grid map (occupancy grid map, OGM). A length of the OGM may be set to 60 meters forward, 10 meters backward, and 20 meters left and right with the waypoint B11 as the center. The flood fill algorithm is used to fill the OGM from B11 as a starting point, to find a longest distance that can be filled forward by using the flood fill algorithm.

In the scenario shown in FIG. 7, after the hard lateral planning constraint on the right side of the waypoint B11 expands, a map edge 60 meters ahead may be filled by using the flood fill algorithm, and the longest distance that can be filled forward is a maximum value (not shown) of the OGM.

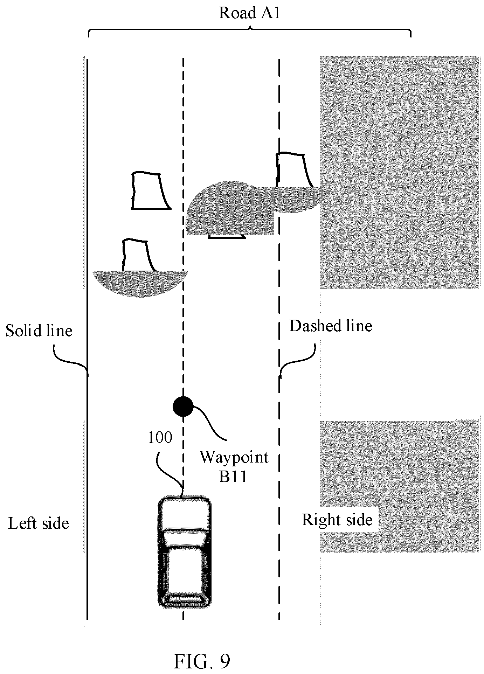

Refer to FIG. 9. In the scenario shown in FIG. 8, the hard lateral planning constraint on the right side of the waypoint B11 does not expand, and positions of starting points of the clustered obstacles in front of the waypoint B11 may be filled by using the flood fill algorithm, that is, 23 meters. That is, the determined longitudinal distance L2 is 23 meters. A longitudinal safety threshold may be set to 2 meters, and the longest distance that can be filled forward is 21 meters. That is, the determined longitudinal distance L4 is 21 meters.

A longest distance desired to avoid a static obstacle may be calculated based on a speed of the vehicle 100 at the waypoint B11. A predicted or planned speed of the vehicle 100 at the waypoint B11 may be set to 26.0 km/h, and a distance that the vehicle 100 travels within 3 seconds is the longest distance desired to avoid a static obstacle. It can be calculated that the longest distance desired to avoid a static obstacle when the vehicle 100 is at the waypoint B11 is 26×3/3.6=21.67 meters. That is, the length L3 is 21.67 meters.

The longitudinal planning constraint of the waypoint B11 is a smaller one selected between the longitudinal distance L4 and the length L3, namely, 21 meters.

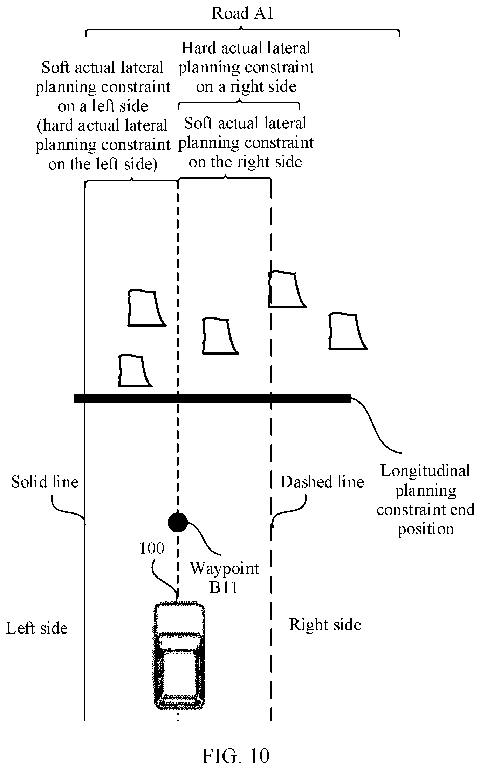

Refer to FIG. 10. The longitudinal planning constraint of the waypoint B11 ends before the static obstacle. When performing lateral planning, the vehicle 100 may ignore obstacles outside the longitudinal planning constraint, and consider only obstacles within the longitudinal planning constraint. That is, when the vehicle 100 is located at the waypoint 11, a driving policy of the vehicle 100 is determined based on road condition information within a longitudinal planning constraint range.

For example, the foregoing solution for determining the longitudinal planning constraint may be specifically performed by the reference path planner of the vehicle 100.

The foregoing describes the solution for determining the actual lateral planning constraint when the road A1 has the object F1 of concern to the vehicle 100 (namely, the ego vehicle). When the object F1 of concern to the ego vehicle does not exist on the road A1, the reference path planner may directly use a determined initial lateral planning constraint as the actual lateral planning constraint, and output to the obstacle avoidance planner.

The foregoing describes a solution for determining the lateral planning constraint when the determining results in both step 303 and step 304 are no. The following describes a solution for determining the lateral planning constraint when the determining result in step 303 is yes.

In some embodiments, when the determining result in step 303 is yes, the reference path planner may perform step 308 to determine a static lateral planning constraint D2 based on a lane line on the side C1 of a lane change start waypoint, and determine a static lateral planning constraint D3 based on a lane line on the side C1 of a lane change end waypoint. During a lane change of the ego vehicle, a static lateral planning constraint on the side C1 for the ego vehicle gradually changes from the static lateral planning constraint D2 to the static lateral planning constraint D3.

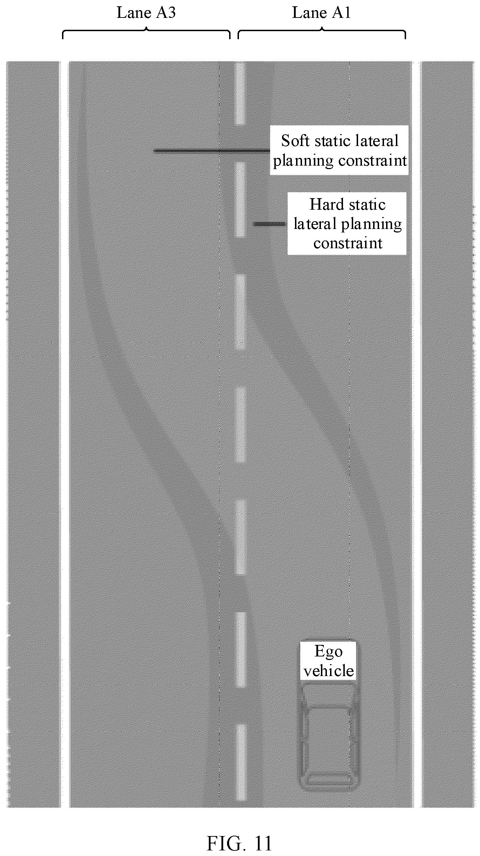

Refer to FIG. 11. It may be set that the ego vehicle (namely, the vehicle 100) is in a lane change state from the lane A1 to a lane A3, that is, the ego vehicle may perform a lane change action from the lane A1 to the lane A3. A static lateral planning constraint on the side C1 of the lane A1 may be determined based on a lane line on the side C1 of the lane A1. Alternatively, a static lateral planning constraint on side C1 of the lane A3 may be determined based on a lane line on the side C1 of the lane A3. For a manner of determining the static lateral planning constraint based on a lane line, refer to the foregoing description. Details are not described herein again. During a lane change, the static lateral planning constraint on the side C1 of the ego vehicle gradually changes from the static lateral planning constraint on the side C1 of the lane A1 to the static lateral planning constraint on the side C1 of the lane A3 .

It can be understood that the reference path planner may respond to a lane change instruction delivered by the behavior planner 10221, and plan a lane change trajectory from the lane A1 to the lane A3 based on ego vehicle perception information, map information, and the like. There may be a plurality of waypoints on the lane change trajectory, or in other words, connection lines between adjacent waypoints in the plurality of waypoints may form the lane change trajectory. It may be determined that a first waypoint that is on the lane change trajectory and that deviates from a center line of the lane A1 is the lane change start waypoint, and determined that a first waypoint that is on the lane change trajectory and that returns to a center line of the lane A3 is the lane change end waypoint. The waypoint that deviates from the center line of the lane A1 may be a waypoint whose distance from the center line of the lane A1 is greater than a preset threshold. The preset threshold may be 0.2 meters, 0.25 meters, or the like, and may be preset in specific implementation. The waypoint that returns to the center line of the lane A3 may be a waypoint whose distance from the center line of the lane A3 is less than or equal to the preset threshold. A distance from the waypoint to the center line may be a nearest distance from the waypoint to the center line. For example, a plumb-line may be made from the waypoint to the center line, and then a distance from the waypoint to a perpendicular foot is used as the distance from the waypoint to the center line.

A static lateral planning constraint on the side C1 of the lane change start waypoint may be determined based on the lane line on the side C1 of the lane change start waypoint. A static lateral planning constraint on the C1 of the lane change end waypoint may be determined based on the lane line on the side C1 of the lane change end waypoint. At least one waypoint located between the lane change start waypoint and the lane change end waypoint of the lane change trajectory may be determined. A static lateral planning constraint of each waypoint in the at least one waypoint changes, based on an arrangement position on the lane change trajectory, from the static lateral planning constraint on the side C1 of a start waypoint to the static lateral planning constraint on the C1 of the lane change end waypoint. For example, a change from the static lateral planning constraint on the side C1 of the start waypoint to the static lateral planning constraint on the C1 of the lane change end waypoint may be the first-order linear change.

Refer to FIG. 11. In a specific example, a width of the lane A1 may be set to 3.6 meters. The lane change start waypoint and the lane change end waypoint are determined from all waypoints of the lane change trajectory. Both soft static lateral planning constraints and hard static lateral planning constraints on the right side of all waypoints from a start of the lane change trajectory to the lane change start waypoint are 3.6/2-0.4=1.4 meters. Soft static lateral planning constraints on the left side of all the waypoints from the start of the lane change trajectory to the lane change start waypoint are 1.4 meters, and hard static lateral planning constraints on the left side are 1.4+1.2=2.6 meters. Soft static lateral planning constraints and hard static lateral planning constraints on the left side of all waypoints from the lane change end waypoint to a last waypoint of the lane change trajectory are 3.6/2-0.4=1.4 meters. Soft static lateral planning constraints on the right side are 1.4 meters. Hard static lateral planning constraints on the right side are 1.4+1.2=2.6 meters. Both soft static lateral planning constraints on the left side and soft static lateral planning constraints on the right side of waypoints between the lane change start waypoint and the lane change end waypoint are 1.4 meters. The hard static lateral planning constraints on the left side are gradually reduced from 2.6 meters to 1.4 meters, and the hard static lateral planning constraints on the right side are gradually increased from 1.4 meters to 2.6 meters. Details may be shown in FIG. 11.

After the static lateral planning constraints of the waypoints in the lane change trajectory are determined, initial lateral planning constraints of the waypoints and actual lateral planning constraints of the waypoints can be determined based on the static lateral planning constraints of the waypoints. For a solution for determining the initial lateral planning constraint and a solution for determining the actual lateral planning constraint, refer to the foregoing description. Details are not described herein again.

The following describes a solution for determining the lateral planning constraint when the determining result in step 303 is no and the determining result in step 304 is yes.

In some embodiments, when the determining result in step 303 is no, and the determining result in step 304 is yes, the reference path planner may further perform step 309, to determine an actual lateral planning constraint of the ego vehicle in the avoidance state based on an initial lateral planning constraint of an avoidance start waypoint.

For example, it may be determined whether an actual driving route of the ego vehicle deviates from the driving reference trajectory B1 by determining whether a nearest distance between a current actual position of the ego vehicle and the driving reference trajectory B1 is greater than the preset threshold Y1, to further determine whether the ego vehicle is in the avoidance state. For example, it may be determined whether the ego vehicle is in the avoidance state by determining a lateral deviation between a final driving trajectory recently output by the lateral planner 10222 (for example, outputting to the longitudinal planner 10223) and the driving reference trajectory B1, and determining whether the lateral deviation is greater than the preset threshold Y2. For details, refer to the foregoing description. Details are not described herein again.

An actual lateral planning constraint on the side C1 of the ego vehicle in the avoidance state may be determined based on an initial lateral planning constraint on the side C1 of a last waypoint B13 before the ego vehicle enters the avoidance state. The waypoint B13 is a waypoint of the driving reference trajectory B1. The waypoint B13 may be referred to as the avoidance start waypoint. That is, the ego vehicle performs an avoidance action from the waypoint B13. For a process of determining the initial lateral planning constraint on the side C1 of the waypoint B13, refer to the foregoing description of the process of determining the initial lateral planning constraint on the side C1 of the waypoint B11.

Specifically, during avoidance, when a current speed of the ego vehicle is greater than or equal to a speed of the ego vehicle at a second waypoint, the initial lateral planning constraint on the side C1 of the waypoint B13 may be determined as an actual lateral planning constraint on the side C1 of a current position of the ego vehicle. That is, during the avoidance, if the ego vehicle accelerates, the lateral planning constraint is kept unchanged, so that the lateral planning constraint does not decrease with acceleration of the speed of the vehicle.

During the avoidance, when the current speed of the ego vehicle is greater than or equal to a speed of the ego vehicle at the waypoint B13, the actual lateral planning constraint on the side C1 of the current position of the ego vehicle is determined based on the current speed of the ego vehicle, a static lateral planning constraint on C1 of the waypoint B13, and a body width of the ego vehicle. The current speed is negatively correlated with the actual lateral planning constraint. For details, refer to the foregoing description of the embodiment shown in step 305. That is, during the avoidance, if the ego vehicle decelerates, the lateral planning constraint may be expanded, to expand avoidance space of the ego vehicle.

In addition, it should be noted that the foregoing uses an example in which step 301 to step 306, step 308, and step 309 are performed by the reference path planner, and step 307 is performed by the obstacle avoidance planner, to describe the method for determining the lateral planning constraint provided in this embodiment of this invention. However, an entity for executing each step in the method for determining the lateral planning constraint is not limited. In another embodiment, the steps in the method for determining the lateral planning constraint may be performed by one or more other applications or components. For example, a lateral planning constraint determining module may be separately set, and the lateral planning constraint determining module performs the steps in the method for determining the lateral planning constraint. During specific implementation, developers may set the entity for executing each step in the method for determining the lateral planning constraint provided in this embodiment of this invention.

Therefore, based on the foregoing solution, a lateral planning constraint of the ego vehicle on a lane in a normal driving state may be determined, a lateral planning constraint of the ego vehicle keeping in a lane but in the avoidance state may be determined, or a lateral planning constraint in the lane change state may be determined.

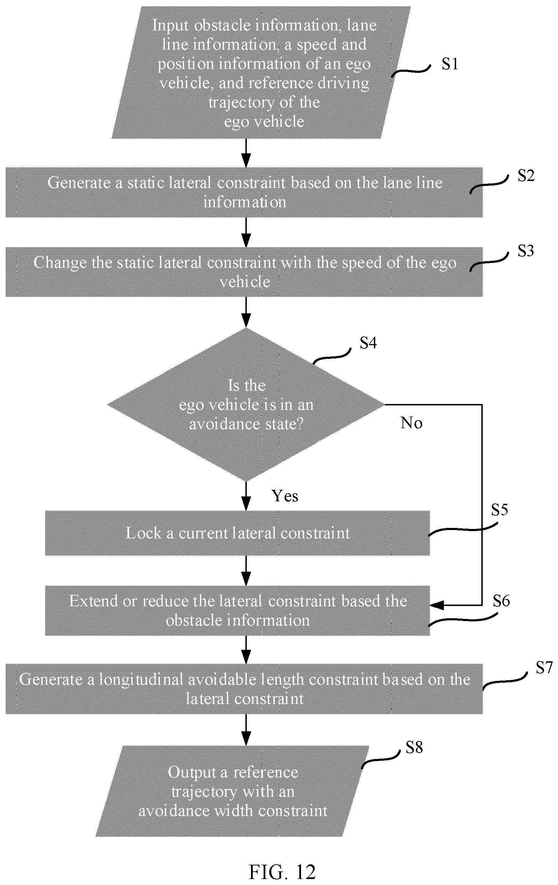

In some embodiments, the method for determining the lateral planning constraint may include steps shown in FIG. 12. Details are as follows.

Step S1: Obtain surrounding obstacle information, lane line information, a current speed of an ego vehicle, and current ego vehicle position information as an input, and obtain position information of all waypoints of a driving reference trajectory of the ego vehicle.

Step S2: Generate, based on different current driving states (driving in a lane, changing a lane to drive, driving at an intersection), a soft static lateral planning constraint that is of each waypoint of the reference trajectory and that is in a lane and a hard static lateral constraint that can cross the lane. When the waypoint of the reference trajectory is located in a changeable lane area (a lane line on this side is a dashed line), a width of the soft static lateral planning constraint is less than a width of a current lane, and a width of the hard static lateral constraint on a changeable lane side is greater than a width of the soft static lateral planning constraint on the changeable lane side. When the waypoint of the reference trajectory is located in an unchangeable lane area (lane lines on both sides are solid lines), the width of the soft static lateral planning constraint is less than the width of the current lane, and the width of the hard static lateral constraint is equal to the width of the soft static lateral planning constraint. When the waypoint of the reference trajectory is located in an intersection area, the width of the soft static lateral planning constraint is less than the width of the current lane, and the width of the hard static lateral constraint is greater than the width of the soft static lateral planning constraint. When the waypoint of the reference trajectory is in a lane change phase of the reference trajectory, the width of the soft static lateral planning constraint gradually transitions from the width of the current lane to a width of a target lane. The hard static lateral planning constraint changes gradually, based on left and right line patterns of the current lane, left and right line patterns of the target lane, and a rule of the waypoint of the reference trajectory located in the changeable lane area or the unchangeable lane area.

Step S3: Change the hard static lateral planning constraint and the soft static lateral constraint with the current speed of the ego vehicle. Through different inertial filtering, the hard static lateral planning constraint and soft static lateral constraint are slowly reduced when the speed of the vehicle increases, and the hard static lateral planning constraint and soft static lateral constraint are rapidly increased when the speed of the ego vehicle decreases, to generate a hysteretic effect.

Step S4: Determine a driving state of the ego vehicle in this case. If the ego vehicle is an avoidance state, perform step S5; and if the ego vehicle currently travels based on the reference trajectory without a lateral movement, skip step S5, and directly perform step S6.

Step S5: When the ego vehicle leaves the reference trajectory to start to avoid or to avoid, keep locked widths of the hard static lateral planning constraint and the soft static lateral constraint unchanged during acceleration of the ego vehicle, and enlarge the widths of the hard static lateral planning constraint and the soft static lateral constraint during deceleration of the ego vehicle, so that the lateral constraint is only relaxed and not narrowed, and avoidance space of the ego vehicle is ensured.

Step S6: Screen a private vehicle normally running in a lane adjacent to the ego vehicle, and if TTC from a position of the private vehicle to a current position of the ego vehicle, and HWT of the private vehicle and the ego vehicle are less than a specific threshold, shrink a width of the hard lateral planning constraint on a private vehicle side of each waypoint of the reference trajectory to the soft lateral planning constraint, and reduce an avoidable range of the ego vehicle; when there is no private vehicle whose constraint needs to be shrunk around the ego vehicle, screen obstacles of interest that greatly invade the current lane of the ego vehicle, and expand the hard lateral planning constraint for the obstacles of interest, so that the ego vehicle can have enough space to be planned to pass through, where the obstacles of interest are screened by removing irrelevant obstacles from the obstacles around the ego vehicle, and a type of the irrelevant obstacles includes an obstacle that is located far behind or in front of the ego vehicle or that does not need to be avoided in normal driving, an obstacle that is far away from a lane of the ego vehicle and that does not intersect, a line pressing obstacle that crosses or plugs at a large angle, and an obstacle that presses a line during driving and that is faster than or far away from the ego vehicle; sort the remaining obstacles of interest from near to far along an SL coordinate system; cluster the obstacles based on a kinematic constraint of the ego vehicle; and calculate widths of lanes that are of two sides of the ego vehicle and that are occupied by the cluster obstacle group closest to the ego vehicle, and when expanding the hard lateral planning constraint can enable the ego vehicle to be planned to pass through and the sides have no collision risk, expand the hard lateral planning constraint on the sides for each waypoint of the reference trajectory.

Step S7: Project the hard lateral planning constraint and a completely static obstacle into the OGM, and obtain, by using the flood fill algorithm, a longest distance that the ego vehicle can stably avoid, and calculate a longest distance expected to avoid the completely static obstacle based on a speed of the ego vehicle, select a smaller one between this distance and the distance obtained by using the flood fill algorithm, and output the smaller one as a final avoidable length. When performing lateral planning, the ego vehicle ignores the obstacles beyond the avoidable length and only avoids the obstacles within the avoidable length.

Step S8: Output a reference trajectory with the hard lateral planning constraint and the soft lateral planning constraint, and the avoidable length to a subsequent avoidance planner.

According to the method for determining the lateral planning constraint provided in this embodiment of this invention, the lateral planning constraint may be dynamically released or shrunk based on an environment. When the ego vehicle travels at a high speed or an ambient environment has a risk, the lateral planning constraint is shrunk, so that the ego vehicle travels in the lane. When large avoidance is needed, the lateral planning constraint is released, to support large cross-lane avoidance of the ego vehicle, so as to ensure ego vehicle driving safety and enhance passability of a system.

According to the method for determining the lateral planning constraint provided in this embodiment of this invention, a longitudinal avoidable length may be further generated, to deal with a static obstacle. When a road ahead is completely blocked by one or more static obstacles, the ego vehicle cannot pass through, and a remaining width is insufficient for the ego vehicle to safely pass through, the planner does not avoid the front static obstacle. That is, the lateral planner may ignore an obstacle beyond the avoidable length, to avoid error avoidance or a phenomenon that the ego vehicle still cannot pass the front obstacle after avoidance. In addition, preview time of the ego vehicle avoiding the static obstacle may be controlled.

According to the method for determining a lateral planning constraint provided in this embodiment of this invention, avoidance constraint may be classified into the lateral planning constraint and the longitudinal planning constraint. The lateral constraint controls the avoidance range, and the avoidance range is divided into two parts: a hard lateral planning constraint that can cross a lane, and a soft lateral planning constraint in a lane. The longitudinal constraint controls the preview time of avoiding the completely static obstacle.

According to the method for determining the lateral planning constraint provided in this embodiment of this invention, the static lateral planning constraint may be generated based on road route information, intersection information, and the like. The static lateral planning constraint may be adjusted with a speed of the ego vehicle. During avoidance, the lateral planning constraint decreases slowly with an increase in the speed of the ego vehicle, and expands rapidly with a decrease in the speed of the ego vehicle. When the ego vehicle is in an avoidance state, the hard lateral planning constraint and the soft lateral planning constraint are locked, so that the hard lateral planning constraint and the soft lateral planning constraint are only expanded and not decreased.

According to the method for determining the lateral planning constraint provided in this embodiment of this invention, the lateral constraint may be dynamically reduced based on an obstacle on a side. When a vehicle in an adjacent lane travels toward the ego vehicle and meets a condition, the hard lateral planning constraint on the side may be reduced. The lateral constraint is dynamically expanded based on the obstacles occupying the lane, and obstacles of interest are screened out, sorted and clustered. An obstacle group closest to the ego vehicle is selected after clustering, and a hard lateral planning constraint on a corresponding side is expanded under a safe situation.

Based on the foregoing, an embodiment of this invention provides a method for determining the lateral planning constraint. The method may be performed by the ego vehicle, that is, the vehicle 100. More specifically, the method may be performed by any component that has a data processing function in the vehicle 100, for example, the reference path planner and/or the obstacle avoidance planner described above.

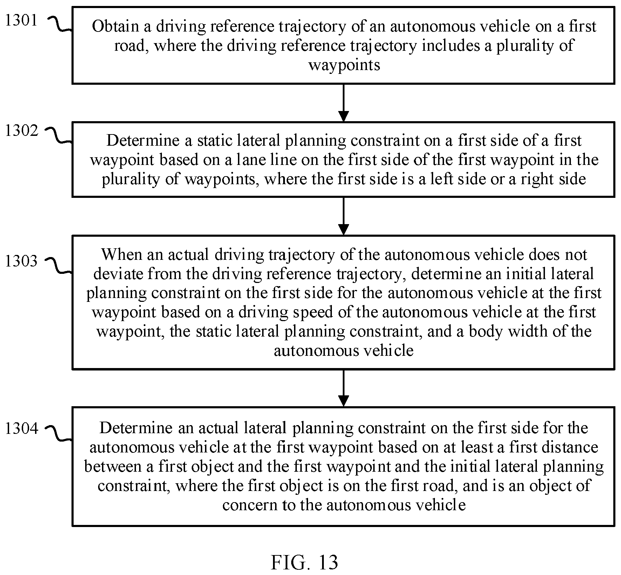

As shown in FIG. 13, the method includes the following steps.

Step 1301: Obtain a driving reference trajectory of an autonomous vehicle on a first road, where the driving reference trajectory includes a plurality of waypoints.

Step 1302: Determine a static lateral planning constraint on a first side of a first waypoint based on a lane line on the first side of the first waypoint in the plurality of waypoints, where the first side is a left side or a right side.

Step 1303: When an actual driving trajectory of the autonomous vehicle does not deviate from the driving reference trajectory, determine an initial lateral planning constraint on the first side for the autonomous vehicle at the first waypoint based on a driving speed of the autonomous vehicle at the first waypoint, the static lateral planning constraint, and a body width of the autonomous vehicle.

Step 1304: Determine an actual lateral planning constraint on the first side for the autonomous vehicle at the first waypoint based on at least a first distance between a first object and the first waypoint and the initial lateral planning constraint, where the first object is on the first road, and is an object of concern to the autonomous vehicle.

According to the method for determining the lateral planning constraint provided in this embodiment of this invention, the lateral planning constraint may be dynamically released or reduced based on a traffic environment, so that driving safety of the ego vehicle can be ensured and passability of the ego vehicle can be enhanced.

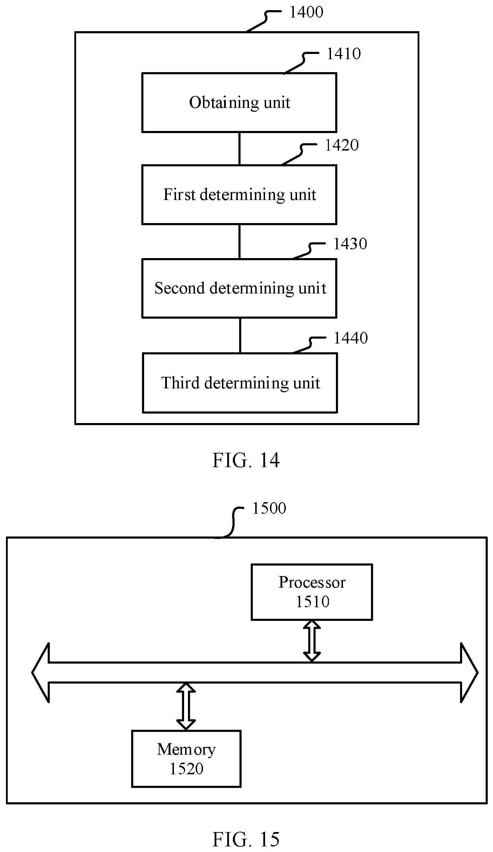

Refer to FIG. 14. An embodiment of this invention provides an apparatus 1400 for determining a lateral planning constraint, which may be configured in an autonomous vehicle, for example, a vehicle 100. Refer to FIG. 14. The apparatus 1400 includes an obtaining unit 1410, a first determining unit 1420, a second determining unit 1430, and a third determining unit 1440.

The obtaining unit 1410 is configured to obtain a driving reference trajectory of the autonomous vehicle on a first road, where the driving reference trajectory includes a plurality of waypoints.

The first determining unit 1420 is configured to determine a static lateral planning constraint on the first side of the first waypoint based on a lane line on the first side of the first waypoint in the plurality of waypoints, where the first side is a left side or a right side.

The second determining unit 140 is configured to: when an actual driving trajectory of the autonomous vehicle does not deviate from the driving reference trajectory, determine an initial lateral planning constraint on the first side for the autonomous vehicle at the first waypoint based on a driving speed of the autonomous vehicle at the first waypoint, the static lateral planning constraint, and a body width of the autonomous vehicle.

The third determining unit 1440 is configured to determine, based on at least a first distance between a first object and the first waypoint and the initial lateral planning constraint, an actual lateral planning constraint on the first side for the autonomous vehicle at the first waypoint, where the first object is on the first road, and is an object of concern to the autonomous vehicle.

Functional units of the apparatus 1400 may be implemented in the foregoing method embodiment, for example, the method embodiment shown in FIG. 13. Details are not described herein again.

The foregoing mainly describes the apparatus provided in this embodiment of this invention from a perspective of a method process. It can be understood that, to implement the foregoing functions, terminals includes corresponding hardware structures and/or software modules for performing the functions. A person skilled in the art should be easily aware that, in combination with units and algorithm steps of the examples described in embodiments disclosed in this specification, this invention may be implemented by hardware or a combination of hardware and computer software. Whether a function is performed by hardware or hardware driven by computer software depends on particular applications and design constraints of the technical solutions. The person skilled in the art may use different methods to implement the described functions for each particular application, but it should not be considered that the implementation goes beyond the scope of this invention.

In this embodiment of this invention, function module division may be performed on the electronic device or the like based on the method embodiment shown in FIG. 13, FIG. 3A and FIG. 3B, or FIG. 12. For example, each function module may be obtained through division corresponding to each function, or two or more functions may be integrated into one processing module. The integrated module may be implemented in a form of hardware, or may be implemented in a form of a software functional module. It should be noted that, in embodiments of this invention, module division is an example, and is merely a logical function division. In actual implementation, another division manner may be used.

According to the apparatus for determining the lateral planning constraint provided in this embodiment of this invention, the lateral planning constraint may be dynamically released or reduced based on a traffic environment, so that driving safety of the ego vehicle can be ensured and passability of the ego vehicle can be enhanced.

Refer to FIG. 15. An embodiment of this invention provides an apparatus 1500 for determining a lateral planning constraint. The apparatus 1500 may perform operations performed by the autonomous vehicle in the foregoing method embodiments, as shown in FIG. 13. The apparatus 1500 may include a processor 1510 and a memory 1520. The memory 1520 stores instructions, and the instructions may be executed by the processor 1510. When the instructions are executed by the processor 1510, the apparatus 1500 may perform the operations performed by the autonomous vehicle in the foregoing method embodiments, as shown in FIG. 13. Specifically, the processor 1510 may perform a data processing operation, and the transceiver 1530 may perform a data sending and/or receiving operation.

It may be understood that, the processor in embodiments of this invention may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this invention may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this invention are all or partially generated. The computer may be a general-purpose computer, a dedicated computer, a computer network, or other programmable apparatuses. The computer instructions may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It may be understood that various numbers in embodiments of this invention are merely used for differentiation for ease of description, and are not used to limit the scope of embodiments of this invention.

## Claims

1. A method for determining a lateral planning constraint, applicable to an autonomous vehicle, wherein the method comprises:
obtaining (1301) a driving reference trajectory of the autonomous vehicle on a first road, wherein the driving reference trajectory comprises a plurality of waypoints;
determining (1302) a static lateral planning constraint on a first side of a first waypoint based on a lane line on the first side of the first waypoint in the plurality of waypoints, wherein the first side is a left side or a right side;
when an actual driving trajectory of the autonomous vehicle does not deviate from the driving reference trajectory, determining (1303) an initial lateral planning constraint on the first side for the autonomous vehicle at the first waypoint based on a driving speed of the autonomous vehicle at the first waypoint, the static lateral planning constraint, and a body width of the autonomous vehicle; and
determining (1304) an actual lateral planning constraint on the first side for the autonomous vehicle at the first waypoint based on at least a first distance between a first object and the first waypoint and the initial lateral planning constraint, wherein the first object is on the first road, and is an object of concern to the autonomous vehicle.

2. The method according to claim 1, wherein the lane line on the first side is a changeable lane line; the static lateral planning constraint comprises a first soft static lateral planning constraint and a first hard static lateral planning constraint, wherein the first soft static lateral planning constraint is less than a half width of a lane in which the first waypoint is located, and the first hard static lateral planning constraint is greater than the half width of the lane in which the first waypoint is located; and
the initial lateral planning constraint comprises a first soft initial lateral planning constraint and a first hard initial lateral planning constraint, wherein the first soft initial lateral planning constraint is determined based on the driving speed of the autonomous vehicle at the first waypoint, the first soft static lateral planning constraint, and the body width of the autonomous vehicle, and the first hard initial lateral planning constraint is determined based on the driving speed of the autonomous vehicle at the first waypoint, the first hard static lateral planning constraint, and the body width of the autonomous vehicle.

3. The method according to claim 2, wherein the first soft static lateral planning constraint is obtained by subtracting a first preset value from the half width of the lane in which the first waypoint is located, and the first hard static lateral planning constraint is obtained by adding a second preset value to the first soft static lateral planning constraint.

4. The method according to claim 2 or 3, wherein the first waypoint is located in a first lane on the first road, the first object is located in a second lane adjacent to the first lane, and the second lane is located on the first side of the first lane; the actual lateral planning constraint comprises a hard actual lateral planning constraint; and
the determining (1304) an actual lateral planning constraint on the first side for the autonomous vehicle at the first waypoint based on at least a first distance between a first object and the autonomous vehicle and the initial lateral planning constraint comprises:
determining a risk degree of collision between the first object and the autonomous vehicle based on the first distance, a moving speed of the first object, a moving direction of the first object, a moving speed of the autonomous vehicle, and a moving direction of the autonomous vehicle;
when the collision risk degree is less than a preset safety threshold, reducing the first hard initial lateral planning constraint, so that the first hard initial lateral planning constraint is less than or equal to the half width of the lane in which the first waypoint is located; and
determining that a reduced first hard initial lateral planning constraint is the hard actual lateral planning constraint.

5. The method according to claim 4, wherein the collision risk degree comprises time to collision TTC and/or head way time HWT.

6. The method according to claim 2 or 3, wherein the first object and the first waypoint are in a same lane, and the autonomous vehicle gradually approaches the first object during driving of the autonomous vehicle; the lane line on the first side is the changeable lane line; the first distance comprises a first lateral offset between the first object and the first waypoint, and the first lateral offset is a distance between the first object and the first waypoint in a first direction; the actual lateral planning constraint comprises a hard actual lateral planning constraint; the first direction is perpendicular to a driving direction of the autonomous vehicle at the first waypoint; and
the determining (1304) an actual lateral planning constraint on the first side for the autonomous vehicle at the first waypoint based on at least a first distance between a first object and the first waypoint and the initial lateral planning constraint comprises:
adding a first difference and the width of the autonomous vehicle to obtain a first sum, wherein the first difference is obtained by subtracting the first soft initial lateral planning constraint from the first lateral offset;
when the first sum is less than or equal to a lateral expansion width of the first side, or a sum of the first sum and a preset first safety distance is less than or equal to the lateral expansion width, adding the first soft initial lateral planning constraint and the lateral expansion width to obtain a second sum; and
determining that the second sum is the hard actual lateral planning constraint.

7. The method according to claim 2 or 3, wherein the first object and the first waypoint are in a same lane, and the autonomous vehicle gradually approaches the first object during driving of the autonomous vehicle; the lane line on the first side is the changeable lane line, and a lane line on an opposite side of the first side is an unchangeable lane line; the first distance comprises a first lateral offset between the first object and the first waypoint, and the first lateral offset is a distance between the first object and the first waypoint in a first direction; the actual lateral planning constraint comprises a hard actual lateral planning constraint; the first direction is perpendicular to a driving direction of the autonomous vehicle at the first waypoint; and
the determining (1304) an actual lateral planning constraint on the first side for the autonomous vehicle at the first waypoint based on at least a first distance between a first object and the first waypoint and the initial lateral planning constraint comprises:
adding a first difference and the width of the autonomous vehicle to obtain a first sum, wherein the first difference is obtained by subtracting the first soft initial lateral planning constraint from the first lateral offset; and
when the first sum is greater than a lateral expansion width of the first side, or a sum of the first sum and a preset first safety distance is greater than the lateral expansion width, determining that the first hard initial lateral planning constraint is the hard actual lateral planning constraint.

8. The method according to claim 7, wherein the method further comprises:
determining a second distance between the first waypoint and the first object in the driving direction of the autonomous vehicle at the first waypoint, and determining a first length of driving of the autonomous vehicle within first duration;
when a third distance is less than the first length, determining that the third distance is a longitudinal planning constraint for the autonomous vehicle at the first waypoint; or when a third distance is greater than the first length, determining that the first length is a longitudinal planning constraint for the autonomous vehicle at the first waypoint, wherein the third distance is equal to the second distance, or the third distance is obtained by subtracting a preset second safety distance from the second distance; and
when the autonomous vehicle is located at the first waypoint, determining a driving policy of the autonomous vehicle based on road condition information within a longitudinal planning constraint range.

9. The method according to claim 1, wherein the determining (1303) an initial lateral planning constraint on the first side for the autonomous vehicle at the first waypoint based on a driving speed of the autonomous vehicle at the first waypoint, the static lateral planning constraint, and a body width of the autonomous vehicle comprises:
when the driving speed is less than or equal to a preset first speed threshold, determining that the initial lateral planning constraint is equal to the static lateral planning constraint;
when the driving speed is greater than or equal to a preset second speed threshold, determining that the initial lateral planning constraint is equal to a half of the body width; and
when the first speed threshold is less than the driving speed, and the driving speed is less than the second speed threshold, determining the initial lateral planning constraint based on the driving speed and a speed-lateral planning constraint curve, wherein a magnitude of a speed is negatively correlated with a magnitude of a lateral planning constraint in the lateral planning constraint-speed curve.

10. The method according to claim 1, wherein the method further comprises: when the autonomous vehicle performs an avoidance action, determining an actual lateral planning constraint on the first side for the autonomous vehicle at a current position based on an initial lateral planning constraint on the first side of a second waypoint in the plurality of waypoints, wherein the autonomous vehicle starts to perform the avoidance action at the second waypoint.

11. The method according to claim 10, wherein the determining an actual lateral planning constraint on the first side for the autonomous vehicle at a current position based on an initial lateral planning constraint on the first side of a second waypoint in the plurality of waypoints comprises:
when a current speed of the autonomous vehicle is greater than or equal to a speed of the autonomous vehicle at the second waypoint, determining that an actual lateral planning constraint on the first side of the second waypoint is the actual lateral planning constraint on the first side of the current position; or
when a current speed of the autonomous vehicle is less than a speed of the autonomous vehicle at the second waypoint, determining the actual lateral planning constraint on the first side of the current position based on the current speed, a static lateral planning constraint on the first side of the second waypoint, and the body width of the autonomous vehicle.

12. An apparatus (1400) for determining a lateral planning constraint, configured in an autonomous vehicle, wherein the apparatus comprises:
an obtaining unit (1410), configured to obtain a driving reference trajectory of the autonomous vehicle on a first road, wherein the driving reference trajectory comprises a plurality of waypoints,
a first determining unit (1420), configured to determine a static lateral planning constraint on a first side of a first waypoint based on a lane line on the first side of the first waypoint in the plurality of waypoints, wherein the first side is a left side or a right side;
a second determining unit (1430), configured to: when an actual driving trajectory of the autonomous vehicle does not deviate from the driving reference trajectory, determine an initial lateral planning constraint on the first side for the autonomous vehicle at the first waypoint based on a driving speed of the autonomous vehicle at the first waypoint, the static lateral planning constraint, and a body width of the autonomous vehicle; and
a third determining unit (1440), configured to determine, based on at least a first distance between a first object and the first waypoint and the initial lateral planning constraint, an actual lateral planning constraint on the first side for the autonomous vehicle at the first waypoint, wherein the first object is on the first road, and is an object of concern to the autonomous vehicle.

13. A computer-readable storage medium, wherein the computer-readable medium stores instructions executed by a computing device, and when the computing device executes the instructions, the method according to any one of claims 1 to 11 is implemented.

14. A computer program comprising instructions which, when the program is executed by a computer, cause the computer to carry out the method according to any one of claims 1 to 11.

## Patentansprüche

1. Verfahren zum Bestimmen einer lateralen Planungseinschränkung, das auf ein autonomes Fahrzeug anwendbar ist, wobei das Verfahren Folgendes umfasst:
Erlangen (1301) einer Fahrreferenztrajektorie des autonomen Fahrzeugs auf einer ersten Straße, wobei die Fahrreferenztrajektorie eine Vielzahl von Wegpunkten umfasst;
Bestimmen (1302) einer statischen lateralen Planungseinschränkung auf einer ersten Seite eines ersten Wegpunktes basierend auf einer Fahrspurlinie auf der ersten Seite des ersten Wegpunktes in der Vielzahl von Wegpunkten, wobei die erste Seite eine linke Seite oder eine rechte Seite ist;
wenn eine tatsächliche Fahrtrajektorie des autonomen Fahrzeugs nicht von der Fahrreferenztrajektorie abweicht, Bestimmen (1303) einer anfänglichen lateralen Planungseinschränkung auf der ersten Seite für das autonome Fahrzeug an dem ersten Wegpunkt basierend auf einer Fahrgeschwindigkeit des autonomen Fahrzeugs an dem ersten Wegpunkt, der statischen lateralen Planungseinschränkung und einer Karosseriebreite des autonomen Fahrzeugs; und
Bestimmen (1304) einer tatsächlichen lateralen Planungseinschränkung auf der ersten Seite für das autonome Fahrzeug an dem ersten Wegpunkt basierend auf mindestens einem ersten Abstand zwischen einem ersten Objekt und dem ersten Wegpunkt und der anfänglichen lateralen Planungseinschränkung, wobei das erste Objekt auf der ersten Straße liegt und ein Objekt von Belang für das autonome Fahrzeug ist.

2. Verfahren nach Anspruch 1, wobei die Fahrspurlinie auf der ersten Seite eine veränderbare Fahrspurlinie ist; die statische laterale Planungseinschränkung eine erste weiche statische laterale Planungseinschränkung und eine erste harte statische laterale Planungseinschränkung umfasst, wobei die erste weiche statische laterale Planungseinschränkung kleiner als eine halbe Breite einer Fahrspur ist, in welcher sich der erste Wegpunkt befindet, und die erste harte statische laterale Planungseinschränkung größer als die halbe Breite der Fahrspur ist, in welcher sich der erste Wegpunkt befindet; und
die anfängliche laterale Planungseinschränkung eine erste weiche anfängliche laterale Planungseinschränkung und eine erste harte anfängliche laterale Planungseinschränkung umfasst, wobei die erste weiche anfängliche laterale Planungseinschränkung basierend auf der Fahrgeschwindigkeit des autonomen Fahrzeugs an dem ersten Wegpunkt, der ersten weichen statischen seitlichen Planungsbeschränkung und der Karosseriebreite des autonomen Fahrzeugs bestimmt wird, und die erste harte anfängliche seitliche Planungseinschränkung basierend auf der Fahrgeschwindigkeit des autonomen Fahrzeugs an dem ersten Wegpunkt, der ersten harten statischen lateralen Planungseinschränkung und der Karosseriebreite des autonomen Fahrzeugs bestimmt wird.

3. Verfahren nach Anspruch 2, wobei die erste weiche statische laterale Planungseinschränkung durch Subtrahieren eines ersten voreingestellten Wertes von der halben Breite der Fahrspur, in welcher sich der erste Wegpunkt befindet, erlangt wird und die erste harte statische laterale Planungseinschränkung durch Addieren eines zweiten voreingestellten Wertes zu der ersten weichen statischen lateralen Planungseinschränkung erlangt wird.

4. Verfahren nach Anspruch 2 oder 3, wobei sich der erste Wegpunkt in einer ersten Fahrspur auf der ersten Straße befindet, sich das erste Objekt in einer zweiten Fahrspur benachbart an der ersten Fahrspur befindet und sich die zweite Fahrspur auf der ersten Seite der ersten Fahrspur befindet; die tatsächliche laterale Planungseinschränkung eine harte tatsächliche laterale Planungseinschränkung umfasst; und
das Bestimmen (1304) einer tatsächlichen lateralen Planungseinschränkung auf der ersten Seite für das autonome Fahrzeug an dem ersten Wegpunkt basierend auf mindestens einem ersten Abstand zwischen einem ersten Objekt und dem autonomen Fahrzeug und der anfänglichen lateralen Planungseinschränkung Folgendes umfasst:
Bestimmen eines Risikogrades für eine Kollision zwischen dem ersten Objekt und dem autonomen Fahrzeug basierend auf dem ersten Abstand, einer Bewegungsgeschwindigkeit des ersten Objekts, einer Bewegungsrichtung des ersten Objekts, einer Bewegungsgeschwindigkeit des autonomen Fahrzeugs und einer Bewegungsrichtung des autonomen Fahrzeugs;
wenn der Grad des Kollisionsrisikos geringer als ein voreingestellter Sicherheitsschwellenwert ist, Reduzieren der ersten harten anfänglichen lateralen Planungseinschränkung, so dass die erste harte anfängliche laterale Planungseinschränkung kleiner oder gleich der halben Breite der Fahrspur ist, in welcher sich der erste Wegpunkt befindet; und
Bestimmen, dass eine reduzierte erste harte anfängliche laterale Planungseinschränkung die harte tatsächliche laterale Planungseinschränkung ist.

5. Verfahren nach Anspruch 4, wobei der Grad des Kollisionsrisikos die Zeit bis zur Kollision TTC und/oder die Fahrzeugfolgezeit HWT umfasst.

6. Verfahren nach Anspruch 2 oder 3, wobei das erste Objekt und der erste Wegpunkt in derselben Fahrspur liegen, und sich das autonome Fahrzeug dem ersten Objekt beim Fahren des autonomen Fahrzeugs allmählich nähert; die Fahrspurlinie auf der ersten Seite die veränderbare Fahrspurlinie ist; der erste Abstand einen ersten lateralen Versatz zwischen dem ersten Objekt und dem ersten Wegpunkt umfasst, und der erste laterale Versatz ein Abstand zwischen dem ersten Objekt und dem ersten Wegpunkt in einer ersten Richtung ist; die tatsächliche laterale Planungseinschränkung eine harte tatsächliche laterale Planungseinschränkung umfasst; die erste Richtung senkrecht zu einer Fahrtrichtung des autonomen Fahrzeugs an dem ersten Wegpunkt ist; und
das Bestimmen (1304) einer tatsächlichen lateralen Planungseinschränkung auf der ersten Seite für das autonome Fahrzeug an dem ersten Wegpunkt basierend auf mindestens einem ersten Abstand zwischen einem ersten Objekt und dem ersten Wegpunkt und der anfänglichen lateralen Planungseinschränkung Folgendes umfasst:
Addieren einer ersten Differenz und der Breite des autonomen Fahrzeugs, um eine erste Summe zu erlangen, wobei die erste Differenz durch Subtrahieren der ersten weichen anfänglichen lateralen Planungseinschränkung von dem ersten seitlichen Versatz erlangt wird;
wenn die erste Summe kleiner oder gleich einer lateralen Ausdehnungsbreite der ersten Seite ist oder eine Summe aus der ersten Summe und einem ersten voreingestellten Sicherheitsabstand kleiner oder gleich der lateralen Ausdehnungsbreite ist, Addieren der ersten weichen anfänglichen lateralen Planungseinschränkung und der lateralen Ausdehnungsbreite, um eine zweite Summe zu erlangen; und
Bestimmen, dass die zweite Summe die harte tatsächliche laterale Planungseinschränkung ist.

7. Verfahren nach Anspruch 2 oder 3, wobei das erste Objekt und der erste Wegpunkt in derselben Fahrspur liegen, und sich das autonome Fahrzeug dem ersten Objekt beim Fahren des autonomen Fahrzeugs allmählich nähert; die Fahrspurlinie auf der ersten Seite die veränderbare Fahrspurlinie ist, und eine Fahrspurlinie auf einer gegenüberliegenden Seite der ersten Seite eine unveränderbare Fahrspurlinie ist; der erste Abstand einen ersten lateralen Versatz zwischen dem ersten Objekt und dem ersten Wegpunkt umfasst, und der erste laterale Versatz ein Abstand zwischen dem ersten Objekt und dem ersten Wegpunkt in einer ersten Richtung ist; die tatsächliche laterale Planungseinschränkung eine harte tatsächliche laterale Planungseinschränkung umfasst; die erste Richtung senkrecht zu einer Fahrtrichtung des autonomen Fahrzeugs an dem ersten Wegpunkt liegt; und
das Bestimmen (1304) einer tatsächlichen lateralen Planungseinschränkung auf der ersten Seite für das autonome Fahrzeug an dem ersten Wegpunkt basierend auf mindestens einem ersten Abstand zwischen einem ersten Objekt und dem ersten Wegpunkt und der anfänglichen lateralen Planungseinschränkung Folgendes umfasst:
Addieren einer ersten Differenz und der Breite des autonomen Fahrzeugs, um eine erste Summe zu erlangen, wobei die erste Differenz durch Subtrahieren der ersten weichen anfänglichen lateralen Planungseinschränkung von dem ersten seitlichen Versatz erlangt wird; und
wenn die erste Summe größer als eine laterale Ausdehnungsbreite der ersten Seite ist oder eine Summe aus der ersten Summe und einem ersten voreingestellten Sicherheitsabstand größer als die laterale Ausdehnungsbreite ist, Bestimmen, dass die erste harte anfängliche laterale Planungseinschränkung die harte tatsächliche laterale Planungseinschränkung ist.

8. Verfahren nach Anspruch 7, wobei das Verfahren ferner Folgendes umfasst:
Bestimmen eines zweiten Abstands zwischen dem ersten Wegpunkt und dem ersten Objekt in der Fahrtrichtung des autonomen Fahrzeugs an dem ersten Wegpunkt, und Bestimmen einer ersten Fahrlänge des autonomen Fahrzeugs innerhalb einer ersten Dauer;
wenn ein dritter Abstand kleiner als die erste Länge ist, Bestimmen, dass der dritte Abstand eine longitudinalen Planungseinschränkung für das autonome Fahrzeug an dem ersten Wegpunkt ist; oder wenn ein dritter Abstand größer als die erste Länge ist, Bestimmen, dass die erste Länge eine longitudinale Planungseinschränkung für das autonome Fahrzeug an dem ersten Wegpunkt ist, wobei der dritte Abstand gleich dem zweiten Abstand ist oder der dritte Abstand durch Subtrahieren eines zweiten voreingestellten Sicherheitsabstands von dem zweiten Abstand erlangt wird; und
wenn sich das autonome Fahrzeug an dem ersten Wegpunkt befindet, Bestimmen einer Fahrstrategie für das autonome Fahrzeug basierend auf Straßenzustandsinformationen innerhalb eines longitudinalen Planungseinschränkungsbereichs.

9. Verfahren nach Anspruch 1, wobei das Bestimmen (1303) einer anfänglichen lateralen Planungseinschränkung auf der ersten Seite für das autonome Fahrzeug an dem ersten Wegpunkt basierend auf einer Fahrgeschwindigkeit des autonomen Fahrzeugs an dem ersten Wegpunkt, der statischen lateralen Planungseinschränkung und einer Karosseriebreite des autonomen Fahrzeugs Folgendes umfasst:
wenn die Fahrgeschwindigkeit kleiner oder gleich einem ersten voreingestellten Geschwindigkeitsschwellenwert ist, Bestimmen, dass die anfängliche laterale Planungseinschränkung gleich der statischen lateralen Planungseinschränkung ist;
wenn die Fahrgeschwindigkeit größer oder gleich einem zweiten voreingestellten Geschwindigkeitsschwellenwert ist, Bestimmen, dass die anfängliche laterale Planungseinschränkung gleich einer Hälfte der Karosseriebreite ist; und
wenn der erste Geschwindigkeitsschwellenwert kleiner als die Fahrgeschwindigkeit ist und die Fahrgeschwindigkeit kleiner als der zweite Geschwindigkeitsschwellenwert ist, Bestimmen der anfänglichen lateralen Planungseinschränkung basierend auf der Fahrgeschwindigkeit und einer geschwindigkeitslateralen Planungseinschränkungskurve, wobei eine Größe einer Geschwindigkeit negativ mit einer Größe einer lateralen Planungseinschränkung in der lateralen Planungseinschränkungsgeschwindigkeitskurve korreliert ist.

10. Verfahren nach Anspruch 1, wobei das Verfahren ferner Folgendes umfasst: wenn das autonome Fahrzeug eine Ausweichaktion durchführt, Bestimmen einer tatsächlichen lateralen Planungseinschränkung auf der ersten Seite für das autonome Fahrzeug an einer aktuellen Position basierend auf einer anfänglichen lateralen Planungseinschränkung auf der ersten Seite eines zweiten Wegpunktes in der Vielzahl von Wegpunkten, wobei das autonome Fahrzeug beginnt, die Ausweichaktion an dem zweiten Wegpunkt durchzuführen.

11. Verfahren nach Anspruch 10, wobei das Bestimmen einer tatsächlichen lateralen Planungseinschränkung auf der ersten Seite für das autonome Fahrzeug an einer aktuellen Position basierend auf einer anfänglichen lateralen Planungseinschränkung auf der ersten Seite eines zweiten Wegpunktes in der Vielzahl von Wegpunkten Folgendes umfasst:
wenn eine aktuelle Geschwindigkeit des autonomen Fahrzeugs größer oder gleich einer Geschwindigkeit des autonomen Fahrzeugs an dem zweiten Wegpunkt ist, Bestimmen, dass eine aktuelle laterale Planungseinschränkung auf der ersten Seite des zweiten Wegpunktes die aktuelle laterale Planungseinschränkung auf der ersten Seite der aktuellen Position ist; oder
wenn eine aktuelle Geschwindigkeit des autonomen Fahrzeugs kleiner als eine Geschwindigkeit des autonomen Fahrzeugs an dem zweiten Wegpunkt ist, Bestimmen der tatsächlichen lateralen Planungseinschränkung auf der ersten Seite der aktuellen Position basierend auf der aktuellen Geschwindigkeit, einer statischen lateralen Planungseinschränkung auf der ersten Seite des zweiten Wegpunktes und der Karosseriebreite des autonomen Fahrzeugs.

12. Einrichtung (1400) zum Bestimmen einer lateralen Planungseinschränkung, die in einem autonomen Fahrzeug konfiguriert ist, wobei die Einrichtung Folgendes umfasst:
eine Erlangungseinheit (1410), die dazu konfiguriert ist, eine Fahrreferenztrajektorie des autonomen Fahrzeugs auf einer ersten Straße zu erlangen, wobei die Fahrreferenztrajektorie eine Vielzahl von Wegpunkten umfasst;
eine erste Bestimmungseinheit (1420), die dazu konfiguriert ist, eine statische laterale Planungseinschränkung auf einer ersten Seite eines ersten Wegpunktes basierend auf einer Fahrspurlinie auf der ersten Seite des ersten Wegpunktes in der Vielzahl von Wegpunkten zu bestimmen, wobei die erste Seite eine linke Seite oder eine rechte Seite ist;
eine zweite Bestimmungseinheit (1430), die dazu konfiguriert ist: wenn eine tatsächliche Fahrtrajektorie des autonomen Fahrzeugs nicht von der Fahrreferenztrajektorie abweicht, eine anfängliche laterale Planungseinschränkung auf der ersten Seite für das autonome Fahrzeug an dem ersten Wegpunkt basierend auf einer Fahrgeschwindigkeit des autonomen Fahrzeugs an dem ersten Wegpunkt, der statischen lateralen Planungseinschränkung und einer Karosseriebreite des autonomen Fahrzeugs zu bestimmen; und
eine dritte Bestimmungseinheit (1440), die dazu konfiguriert ist, eine tatsächliche laterale Planungseinschränkung auf der ersten Seite für das autonome Fahrzeug an dem ersten Wegpunkt basierend auf mindestens einem ersten Abstand zwischen einem ersten Objekt und dem ersten Wegpunkt und der anfänglichen lateralen Planungseinschränkung zu bestimmen, wobei das erste Objekt auf der ersten Straße liegt und ein Objekt von Belang für das autonome Fahrzeug ist.

13. Computerlesbares Speichermedium, wobei das computerlesbare Medium Anweisungen speichert, die durch eine Rechenvorrichtung ausgeführt werden, und, wenn die Rechenvorrichtung die Anweisungen ausführt, das Verfahren nach einem der Ansprüche 1 bis 11 implementiert wird.

14. Computerprogramm, umfassend Anweisungen, welche bei Ausführung des Programms durch einen Computer bewirken, dass der Computer das Verfahren nach einem der Ansprüche 1 bis 11 durchführt.

## Revendications

1. Procédé permettant de déterminer une contrainte de planification latérale, applicable à un véhicule autonome, dans lequel le procédé comprend :
l'obtention (1301) d'une trajectoire de référence de conduite du véhicule autonome sur une première route, dans lequel la trajectoire de référence de conduite comprend une pluralité de points de passage ;
la détermination (1302) d'une contrainte de planification latérale statique sur un premier côté d'un premier point de passage sur la base d'une ligne de voie sur le premier côté du premier point de passage dans la pluralité de points de passage, dans lequel le premier côté est un côté gauche ou un côté droit ;
lorsqu'une trajectoire de conduite réelle du véhicule autonome ne s'écarte pas de la trajectoire de référence de conduite, la détermination (1303) d'une contrainte de planification latérale initiale sur le premier côté pour le véhicule autonome au niveau du premier point de passage sur la base d'une vitesse de conduite du véhicule autonome au niveau du premier point de passage, de la contrainte de planification latérale statique et d'une largeur de carrosserie du véhicule autonome ; et
la détermination (1304) d'une contrainte de planification latérale réelle sur le premier côté pour le véhicule autonome au niveau du premier point de passage sur la base d'au moins une première distance entre un premier objet et le premier point de passage et la contrainte de planification latérale initiale, dans lequel le premier objet se trouve sur la première route et est un objet d'intérêt pour le véhicule autonome.

2. Procédé selon la revendication 1, dans lequel la ligne de voie sur le premier côté est une ligne de voie variable ; la contrainte de planification latérale statique comprend une première contrainte de planification latérale statique souple et une première contrainte de planification latérale statique rigide, dans lequel la première contrainte de planification latérale statique souple est inférieure à une demi-largeur d'une voie dans laquelle le premier point de passage est situé, et la première contrainte de planification latérale statique rigide est supérieure à la demi-largeur de la voie dans laquelle le premier point de passage est situé ; et
la contrainte de planification latérale initiale comprend une première contrainte de planification latérale initiale souple et une première contrainte de planification latérale initiale rigide, dans lequel la première contrainte de planification latérale initiale souple est déterminée sur la base de la vitesse de conduite du véhicule autonome au niveau du premier point de passage, de la première contrainte de planification latérale statique souple et de la largeur de carrosserie du véhicule autonome, et la première contrainte de planification latérale initiale rigide est déterminée sur la base de la vitesse de conduite du véhicule autonome au niveau du premier point de passage, de la première contrainte de planification latérale statique rigide et de la largeur de carrosserie du véhicule autonome.

3. Procédé selon la revendication 2, dans lequel la première contrainte de planification latérale statique souple est obtenue en soustrayant une première valeur prédéfinie de la demi-largeur de la voie dans laquelle le premier point de passage est situé, et la première contrainte de planification latérale statique rigide est obtenue en ajoutant une seconde valeur prédéfinie à la première contrainte de planification latérale statique souple.

4. Procédé selon la revendication 2 ou 3, dans lequel le premier point de passage est situé sur une première voie de la première route, le premier objet est situé sur une seconde voie adjacente à la première voie, et la seconde voie est située sur le premier côté de la première voie ; la contrainte de planification latérale réelle comprend une contrainte de planification latérale réelle rigide ; et
la détermination (1304) d'une contrainte de planification latérale réelle sur le premier côté pour le véhicule autonome au niveau du premier point de passage sur la base d'au moins une première distance entre un premier objet et le véhicule autonome et de la contrainte de planification latérale initiale comprend :
la détermination d'un degré de risque de collision entre le premier objet et le véhicule autonome sur la base de la première distance, d'une vitesse de déplacement du premier objet, d'une direction de déplacement du premier objet, d'une vitesse de déplacement du véhicule autonome et d'une direction de déplacement du véhicule autonome ;
lorsque le degré de risque de collision est inférieur à un seuil de sécurité prédéfini, la réduction de la première contrainte de planification latérale initiale rigide, de sorte que la première contrainte de planification latérale initiale rigide est inférieure ou égale à la demi-largeur de la voie dans laquelle le premier point de passage est situé ; et
la détermination qu'une première contrainte de planification latérale initiale rigide réduite est la contrainte de planification latérale réelle rigide.

5. Procédé selon la revendication 4, dans lequel le degré de risque de collision comprend le temps de collision TTC et/ou le temps d'intervalle HWT.

6. Procédé selon la revendication 2 ou 3, dans lequel le premier objet et le premier point de passage se trouvent sur une même voie, et le véhicule autonome s'approche progressivement du premier objet pendant la conduite du véhicule autonome ; la ligne de voie sur le premier côté est la ligne de voie variable ; la première distance comprend un premier décalage latéral entre le premier objet et le premier point de passage, et le premier décalage latéral est une distance entre le premier objet et le premier point de passage dans une première direction ; la contrainte de planification latérale réelle comprend une contrainte de planification latérale réelle rigide ; la première direction est perpendiculaire à une direction de conduite du véhicule autonome au niveau du premier point de passage ; et
la détermination (1304) d'une contrainte de planification latérale réelle sur le premier côté pour le véhicule autonome au niveau du premier point de passage sur la base d'au moins une première distance entre un premier objet et le premier point de passage et de la contrainte de planification latérale initiale comprend :
l'ajout d'une première différence et de la largeur du véhicule autonome pour obtenir une première somme, dans lequel la première différence est obtenue en soustrayant la première contrainte de planification latérale initiale souple du premier décalage latéral ;
lorsque la première somme est inférieure ou égale à une largeur d'expansion latérale du premier côté, ou qu'une somme de la première somme et d'une première distance de sécurité prédéfinie est inférieure ou égale à la largeur d'expansion latérale, l'ajout de la première contrainte de planification latérale initiale souple et de la largeur d'expansion latérale pour obtenir une seconde somme ; et
la détermination que la seconde somme est la contrainte de planification latérale réelle rigide.

7. Procédé selon la revendication 2 ou 3, dans lequel le premier objet et le premier point de passage se trouvent sur une même voie, et le véhicule autonome s'approche progressivement du premier objet pendant la conduite du véhicule autonome ; la ligne de voie sur le premier côté est la ligne de voie variable, et une ligne de voie sur un côté opposé du premier côté est une ligne de voie non variable ; la première distance comprend un premier décalage latéral entre le premier objet et le premier point de passage, et le premier décalage latéral est une distance entre le premier objet et le premier point de passage dans une première direction ; la contrainte de planification latérale réelle comprend une contrainte de planification latérale réelle rigide ; la première direction est perpendiculaire à une direction de conduite du véhicule autonome au niveau du premier point de passage ; et
la détermination (1304) d'une contrainte de planification latérale réelle sur le premier côté pour le véhicule autonome au niveau du premier point de passage sur la base d'au moins une première distance entre un premier objet et le premier point de passage et de la contrainte de planification latérale initiale comprend :
l'ajout d'une première différence et de la largeur du véhicule autonome pour obtenir une première somme, dans lequel la première différence est obtenue en soustrayant la première contrainte de planification latérale initiale souple du premier décalage latéral ; et
lorsque la première somme est supérieure une la largeur d'expansion latérale du premier côté, ou qu'une somme de la première somme et d'une première distance de sécurité prédéfinie est supérieure à la largeur d'expansion latérale, la détermination que la première contrainte de planification latérale initiale rigide est la contrainte de planification latérale réelle rigide.

8. Procédé selon la revendication 7, dans lequel le procédé comprend en outre :
la détermination d'une deuxième distance entre le premier point de passage et le premier objet dans la direction de conduite du véhicule autonome au niveau du premier point de passage, et la détermination d'une première longueur de conduite du véhicule autonome dans la première durée ;
lorsque la troisième distance est inférieure à la première longueur, la détermination que la troisième distance est une contrainte de planification longitudinale pour le véhicule autonome au niveau du premier point de passage ; ou lorsque la troisième distance est supérieure à la première longueur, la détermination que la première longueur est une contrainte de planification longitudinale pour le véhicule autonome au niveau du premier point de passage, dans lequel la troisième distance est égale à la deuxième distance, ou la troisième distance est obtenue en soustrayant une deuxième distance de sécurité prédéfinie de la deuxième distance ; et
lorsque le véhicule autonome est situé au niveau du premier point de passage, la détermination d'une politique de conduite du véhicule autonome sur la base d'informations sur l'état de la route dans une plage de contrainte de planification longitudinale.

9. Procédé selon la revendication 1, dans lequel la détermination (1303) d'une contrainte de planification latérale initiale sur le premier côté pour le véhicule autonome au niveau du premier point de passage sur la base d'une vitesse de conduite du véhicule autonome au niveau du premier point de passage, la contrainte de planification latérale statique et la largeur de carrosserie du véhicule autonome comprend :
lorsque la vitesse de conduite est inférieure ou égale à un premier seuil de vitesse prédéfini, la détermination que la contrainte de planification latérale initiale est égale à la contrainte de planification latérale statique ;
lorsque la vitesse de conduite est supérieure ou égale à un second seuil de vitesse prédéfini, la détermination que la contrainte de planification latérale initiale est égale à la moitié de la largeur de carrosserie ; et
lorsque le premier seuil de vitesse est inférieur à la vitesse de conduite, et que la vitesse de conduite est inférieure au second seuil de vitesse, la détermination de la contrainte de planification latérale initiale sur la base de la vitesse de conduite et d'une courbe contrainte de planification latérale-vitesse, dans lequel une amplitude d'une vitesse est corrélée négativement avec une amplitude d'une contrainte de planification latérale dans la courbe contrainte de planification latérale-vitesse.

10. Procédé selon la revendication 1, dans lequel le procédé comprend en outre : lorsque le véhicule autonome réalise une action d'évitement, la détermination d'une contrainte de planification latérale réelle sur le premier côté pour le véhicule autonome au niveau d'une position actuelle sur la base d'une contrainte de planification latérale initiale sur le premier côté d'un second point de passage parmi la pluralité de points de passage, dans lequel le véhicule autonome commence à réaliser l'action d'évitement au niveau du second point de passage.

11. Procédé selon la revendication 10, dans lequel la détermination d'une contrainte de planification latérale réelle sur le premier côté pour le véhicule autonome au niveau d'une position actuelle sur la base d'une contrainte de planification latérale initiale sur le premier côté d'un second point de passage parmi la pluralité de points de passage comprend :
lorsqu'une vitesse actuelle du véhicule autonome est supérieure ou égale à une vitesse du véhicule autonome au niveau du second point de passage, la détermination qu'une contrainte de planification latérale réelle sur le premier côté du second point de passage est la contrainte de planification latérale réelle sur le premier côté de la position actuelle ; ou
lorsqu'une vitesse actuelle du véhicule autonome est inférieure à une vitesse du véhicule autonome au niveau du second point de passage, la détermination de la contrainte de planification latérale réelle sur le premier côté de la position actuelle sur la base de la vitesse actuelle, d'une contrainte de planification latérale statique sur le premier côté du second point de passage et de la largeur de carrosserie du véhicule autonome.

12. Appareil (1400) permettant de déterminer une contrainte de planification latérale, configuré dans un véhicule autonome, dans lequel l'appareil comprend :
une unité d'obtention (1410), configurée pour obtenir une trajectoire de référence de conduite du véhicule autonome sur une première route, dans lequel la trajectoire de référence de conduite comprend une pluralité de points de passage ;
une unité de détermination (1420), configurée pour déterminer une contrainte de planification latérale statique sur un premier côté d'un premier point de passage sur la base d'une ligne de voie sur le premier côté du premier point de passage dans la pluralité de points de passage, dans lequel le premier côté est un côté gauche ou un côté droit ;
une deuxième unité de détermination (1430), configurée pour :
lorsqu'une trajectoire de conduite réelle du véhicule autonome ne s'écarte pas de la trajectoire de référence de conduite, déterminer une contrainte de planification latérale initiale sur le premier côté pour le véhicule autonome au niveau du premier point de passage sur la base d'une vitesse de conduite du véhicule autonome au niveau du premier point de passage, de la contrainte de planification latérale statique et d'une largeur de carrosserie du véhicule autonome ; et
une troisième unité de détermination (1440), configurée pour déterminer, sur la base d'au moins une première distance entre un premier objet et le premier point de passage et de la contrainte de planification latérale initiale, une contrainte de planification latérale réelle sur le premier côté pour le véhicule autonome au niveau du premier point de passage, dans lequel le premier objet se trouve sur la première route et est un objet d'intérêt pour le véhicule autonome.

13. Support de stockage lisible par ordinateur, dans lequel le support lisible par ordinateur stocke des instructions exécutées par un dispositif informatique, et lorsque le dispositif informatique exécute les instructions, le procédé selon l'une quelconque des revendications 1 à 11 est mis en œuvre.

14. Programme informatique comprenant des instructions qui, lorsque le programme est exécuté par un ordinateur, amènent l'ordinateur à effectuer le procédé selon l'une quelconque des revendications 1 à 11.
